## Europäisches Patentamt

## European Patent Office

## Office européen des brevets

(11) Publication number: **0 030 160**
A2

(12)

# EUROPEAN PATENT APPLICATION

(21) Application number: **80304355.3**

(22) Date of filing: **03.12.80**

(51) Int. Cl.³: **G 06 F 3/037**

(30) Priority: **03.12.79 US 99352**

(43) Date of publication of application:
**10.06.81 Bulletin 81/23**

(84) Designated Contracting States:
**DE FR GB NL**

(71) Applicant: **XEROX CORPORATION**
Xerox Square - 020
Rochester New York 14644(US)

(72) Inventor: **Dunn, Richard P.**
17440 Cohasset Street
Van Nuys California 91406(US)

(72) Inventor: **Bebb, Herbert B.**
2629 Via Valdes
Palos Verdes Est. California(US)

(72) Inventor: **Mosing, Lionel W.**
20251 Bancroft Circle
Huntington Beach California(US)

(72) Inventor: **Ciuffini, Anthony J.**
4104 Admirable Drive
Rancho Palos Verdes California 90274(US)

(72) Inventor: **Bartulis, Michael V.**
23905 Los Codona Ave.
Torrance California 90505(US)

(72) Inventor: **Smura, Edwin J.**
2961 Copa de Oro
Los Alamitos California 90720(US)

(74) Representative: **Weatherald, Keith Baynes et al,**
European Patent Attorney c/o Rank Xerox Limited,
Patent Dept. Rank Xerox House 338 Euston Road
London NW1 3BH(GB)

(54) **Interactive user-machine interface method and apparatus.**

(57) This invention relates to a user interface device (UI device) used for machine control. The UI device is comprised a video display (124) capable of presenting desired images to the machine operator and a touch-sensitive device (125) capable of detecting operator requests by means of the operator touching the surface of the video display (124). A standard keyboard (126) may also be employed when typed responses are required of the operator, or a QWERTY keyboard may be displayed on the display 124. The UI device is controlled by a general purpose computer (101) which also controls the on-line machine (102). Visual elements presented to the user on the UI device's display (124) include instructions in text (orthographic display), and images (imaginal display). Displayed images may include and log status indicators (eg, meters, thermometers) and buttons which the operator can touch to signal control requests. The displayed images change dynamically, so that only relevant indicators and valid control buttons are presented to the user at any given time (termed "conditional disclosure"), and the display format can be changed completely upon operator request, to allow for control of infrequently used or complex features (termed "progressive disclosure"). A set of schematics and flow charts are included to complete the disclosure of the system. The resultant interactive display enables a relatively untrained operator to control a feature-rich or complex system.

./...

BASIC CONCEPTS

FIG. 1

## INTERACTIVE USER-MACHINE INTERFACE METHOD AND APPARATUS

This invention relates to human interfaces for the control of complex machinery, and, more particularly, to computer-controlled systems wherein the user can specify a number of operating parameters to control machine operation.

Prior art human interfaces are characterized by either control panels or keyboard input systems coupled with orthographic (text) video displays. For complex control processes, the control panel becomes a large area composed of various buttons, knobs, indicator lights, and perhaps meters. This array of elements can be quite baffling to the untrained user, and is thus particularly unsuitable for the control of devices intended for casual usage, such as a copier.

The use of a common orthographic video display device or printer mechanism, coupled with a keyboard for user input, requires the user to interface with the computer via a dialogue whose nature is determined as much by the computer's requirements for input-output protocols as by the operational requirements of the machinery being controlled. This type of user interface typically requires that the user learn a set of commands and then type these commands as required to initiate machine operations. As before, the casual user is effectively discouraged from using the system due to the difficulty of learning its control procedures.

It would be desirable, therefore, to provide a user interface having the attributes of simplicity (so that the casual user would not be discouraged from using the machine) while still offering the full extent of control capabilities required by the trained operator in order to extract full operational advantage from the machine.

In order to meet these requirements, a user interface device (UI device) is offered which is capable of simulating a control panel through the mechanisms of imaginal display and touch screen function selection. A bit-mapped CRT display is used in conjunction with a computer system and special refresh electronics (Ref: U. S. Patent 4,103,331) to present the image of a control panel to the user. Buttons displayed in the image are positioned to correspond with coordinate points within an infrared emitter-detector diode matrix placed around the periphery of the screen and capable of detecting a touch of the screen by the user's finger or similar. In this manner, the user is able to react to the screen display as if it were an actual panel of buttons. Additionally, orthographic (text) data appears on the screen to label the buttons and to provide other information as needed, and imaginal (picture) images are displayed to convey information commonly presented through meters and dials on conventional control panels.

The display scenario for a given machine control. application typically consists of multiple distinct display formats termed "frames". The initial frame presented to the user controls only the basic functions of the machine, and additionally presents one or more buttons as appropriate to select special features. When the user selects one of the special feature buttons, the basic frame is replaced by a new frame displaying the controls corresponding to that special feature plus a "RETURN" button used to return to the basic frame after the special control requests have been entered. Further, a special frame can include additional special feature buttons to select still deeper levels of control functions on additional frames. Thus a tree structure is realized wherein the user who requires special features works his way down the branches of the tree (i.e., calls up deeper frames) to reach whatever level of control his application requires. A principle advantage of this system of "progressive disclosure" is that the casual user sees only the relatively simple basic frame, and, when additional features are required, only the controls and indicators relevant to the required features are displayed as the necessary additional frames are called up.

Individual frames implement a "conditional disclosure" feature whereby display elements in the form of buttons, indicators or alphanumeric material are removed from the display whenever their functions are not valid to the current state of the process. For example, a ten-digit touch pad, similar to the ubiquitous telephone "touch-tone" pad, appears on the screen whenever the entry of numerical data is a legitimate user operation and disappears when numerical data are not needed.

The system comprises a computer or processor which communicates with the User Interface (UI) through a set of circuits (herein called the User Interface Logic (UIL)) to display to the operator a set of images and messages, and also communicates with the host system to command the system functions received from the User Interface.

The present invention will now be described by way of example with reference to the accompanying drawings, in which:

Figure 1 is a block diagram representation of the basic computer controlled machine concept typical of the state of the art;

Figure 2 is a block diagram representation of the system functions present in the computer controlled system of the present invention;

Figure 3 is a functional block diagram representation of the Machine Control Task (MT), which directly controls the Machine functions;

Figure 4 is a functional block diagram representation of the User Interface Control Task (UT), which controls interaction with the System User and instructs the Machine Control Task;

Figure 5 is a functional block diagram representation of the Display Image Generator Task (DT), which controls the displayed image presented to the System User;

Figure 6 is a functional block diagram representation of the Touch Function Decode Task (TT), which decodes System User requests from the touch screen or other System User pointing devices;

Figure 7 is a flow chart representation of the operations performed by the Machine Control Task (MT);

Figure 8 is a flow chart representation of the operations performed by the User Interface Control Task (UT);

Figure 9 is a flow chart representation of the operations performed by the Display Image Generator Task (DT);

Figure 10 is a flow chart representation of the process of updating the Display Screen image;

Figure 11 is a flow chart representation of the process of adding and removing Screen Elements;

Figure 12 is a flow chart representation of the operations performed by the Touch Decode Task (TT);

Figure 13 shows the software table structure used to define the various frame formats to the Display Image Generator Task;

Figure 14 shows the frame displayed to the user when the system is idle (the "Walking Button");

Figure 15 shows the frame displayed for control of the basic functions of the copier;

Figure 16 shows the frame displayed for control of the reduction feature of the copier;

Figure 17 shows the frame displayed for control of the variable density feature of the copier;

Figure 18 is a block diagram of circuits required to drive the user interface;

Figure 19 is a block diagram of the control logic to the computer;

Figure 20 is a schema of the computer output lines to the control logic unit;

Figure 21 is a schema of the circuit for moving the horizontal tab;

Figure 22 is a schema of the data buffer for 'even' line data;

Figure 23 is a schema of the cursor logic;

Figure 24 is a schema of the circuit for ORing the cursor and video data;

Figure 25 is a schema of the CRT controller section;

Figure 26 is a schema of the local font storage;

Figure 27 is a schema of the path of the CRT video data;

Figure 28 is a schema of the page buffer;

Figures 29 and 30 are complementary schemeta of the touch panel interface, and

Figures 31-33 are typical representations of displays available on the interace device when it is desired to change the frame.

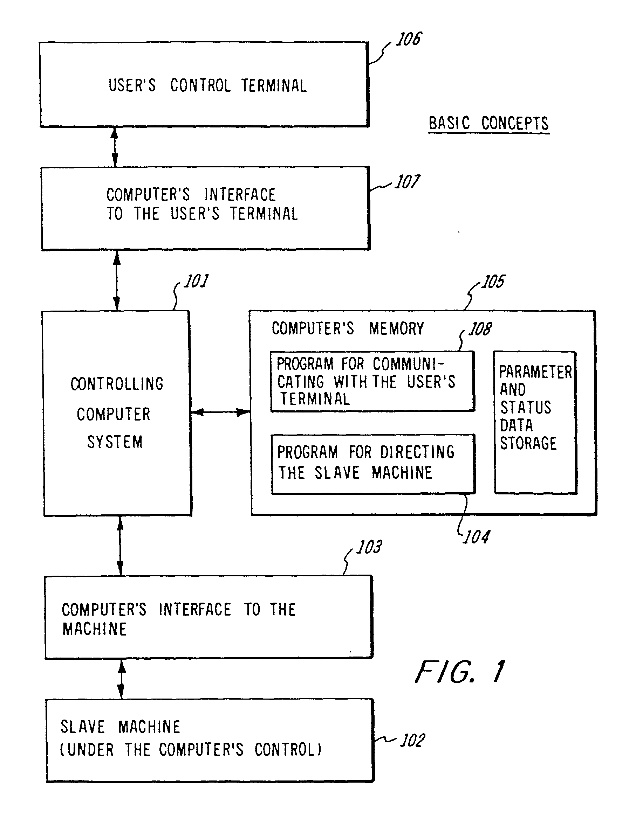

Referring to Figure 1, a computer controlled machine system with user interface of the general case is shown. In this common embodiment, the computer system 101 is interfaced to the machine 102 through interface hardware 103 and is programmed to control the machine through one or more computer programs 104 residing in the computer's main memory or in the computer's microcode 105. The user's interface to the computer is typically through a terminal 106, such as a CRT display with keyboard, interfaced to the computer through interface hardware 107. In this implementation, the computer program for the user's interface 108 communicates with the user by displaying output at the display station of the user's terminal 106, and by accepting input commands typed by the user on the terminal's keyboard. The present invention replaces the user's terminal with a complex user interface device (UI device), but the keyboard may be retained to be used by the operator for any purpose. For example, some displays may request information from the operator which may more easily be supplied by a keyboard. Alphanumeric information for instance, would be conveniently enterable by keyboard. If a keyboard were to be used in conjunction with the display described herein, it would be coupled to the computer or to the display in any well-known manner.

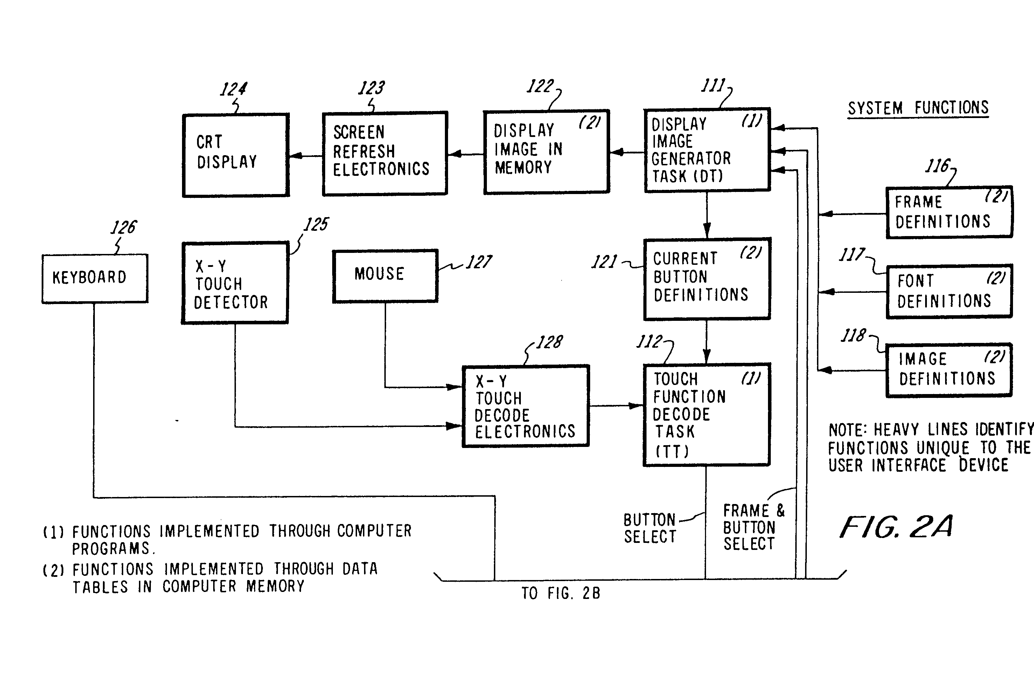

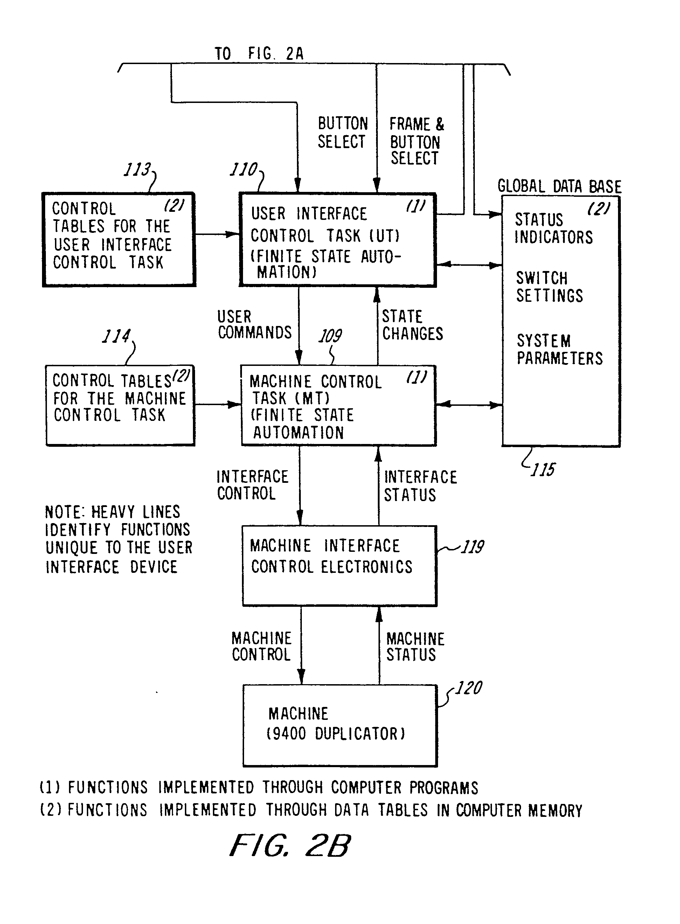

Figure 2 shows a computer controlled machine system employing the present invention (UI device). Functions unique to the UI device are shown in heavy lines to emphasize the area of the invention. The program functions of Machine Control 109, User Interface Control 110, Display Image Generation 111, and Touch Function Decode 112 are Task implementations as described in US Patent 4 103 330. The two main tasks, User Interface Control 110 and Machine control 109, are finite state machine implementations, driven from Tables 113 and 114 respectively.

The electronic and program functions of the Machine Control Task 109, the Machine Interface Control Electronics 119, and the Machine itself, 120 (a Xerox (registered trademark) 9400 duplicator for the preferred embodiment), are neither unique implementations nor part of the UI device. However, for completeness of the embodiment these functions are now described.

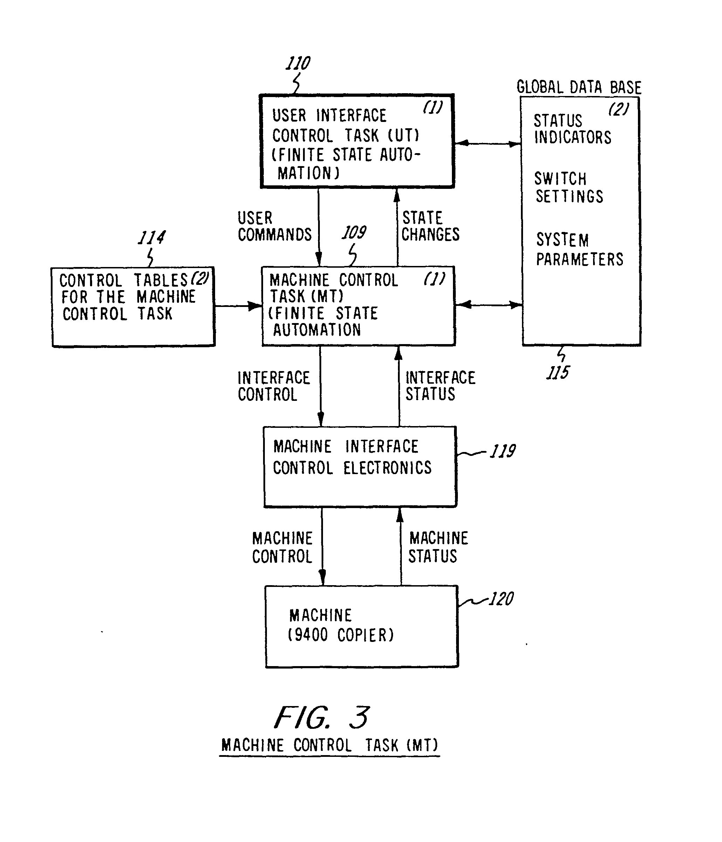

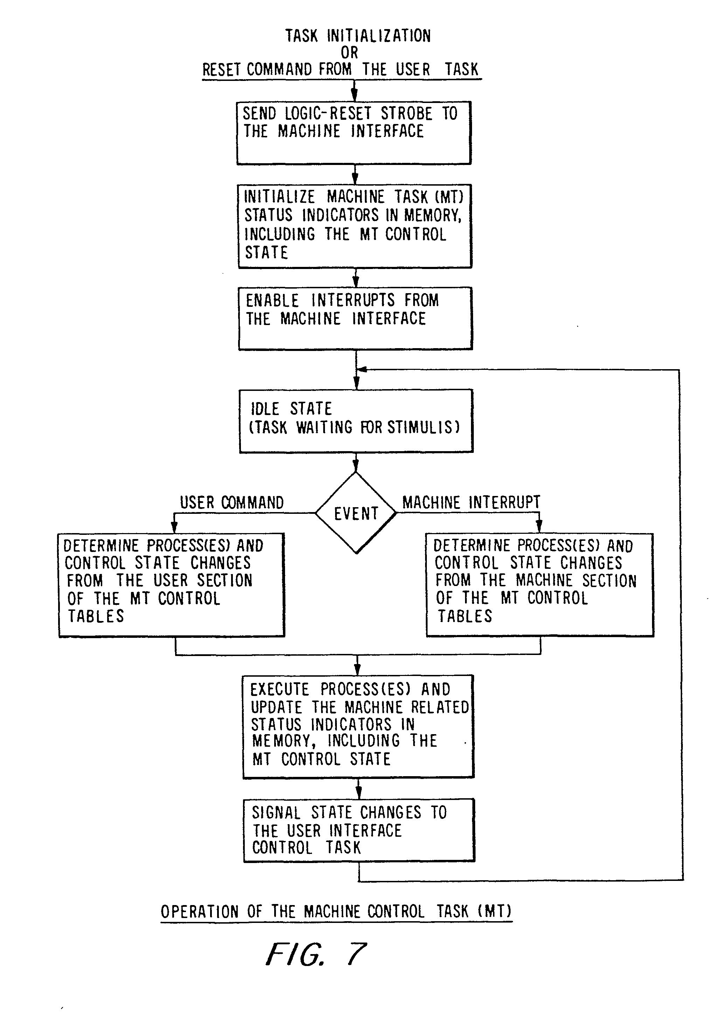

The Machine Control Task 109 and related electronic functions including the Machine 120 and its Interface, are shown in figure 3 and Figure 7. Figure 3 is a block diagram showing the functional relationships between the Machine Control Task (MT) 109 and the other system elements with which the MT interacts. When the system is started the MT begins executing the processes shown in Figure 7. First, the MT performs the reset function to the Machine via the Machine interface in order to ensure that the Machine state is known and controlled. MT status words in memory are initialized, and the MT is now in its general idle state waiting for instructions from the User Interface Control Task (UT) 110, or after the Machine is running, for signals (interrupts) from the Machine via its Interface 109. When a user command or machine interrupt is received, the MT determines the action(s) to be taken from its control tables 114, and executes the process(es) and updates its state indicators as appropriate. Significant changes in machine status, as defined in the control tables 114, are signalled back to the UT 110 so that the display can be updated quickly.

- 6 -

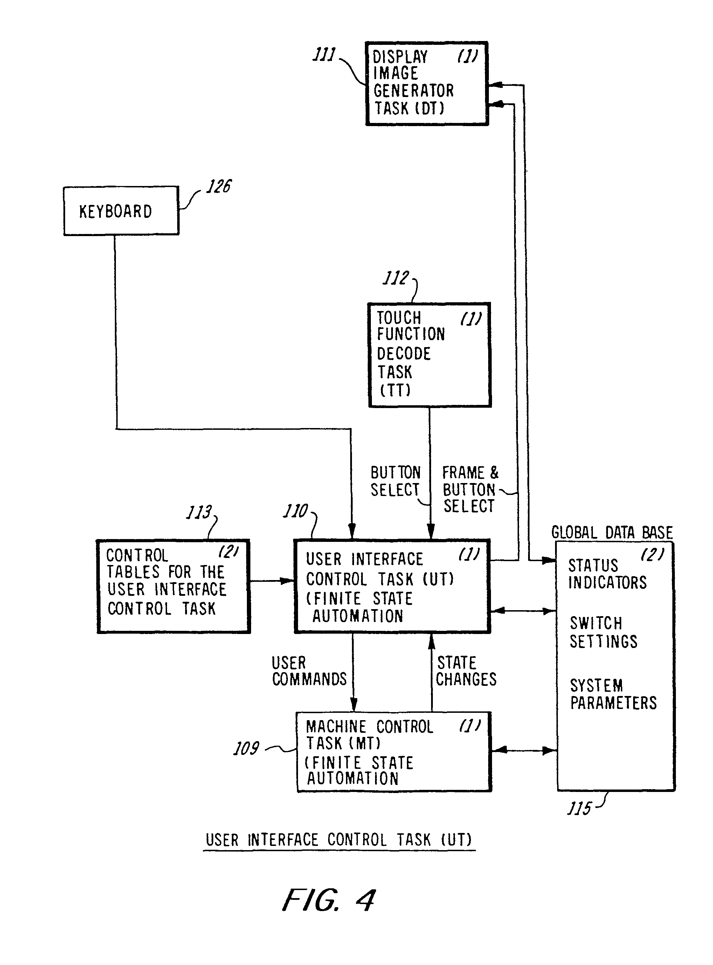

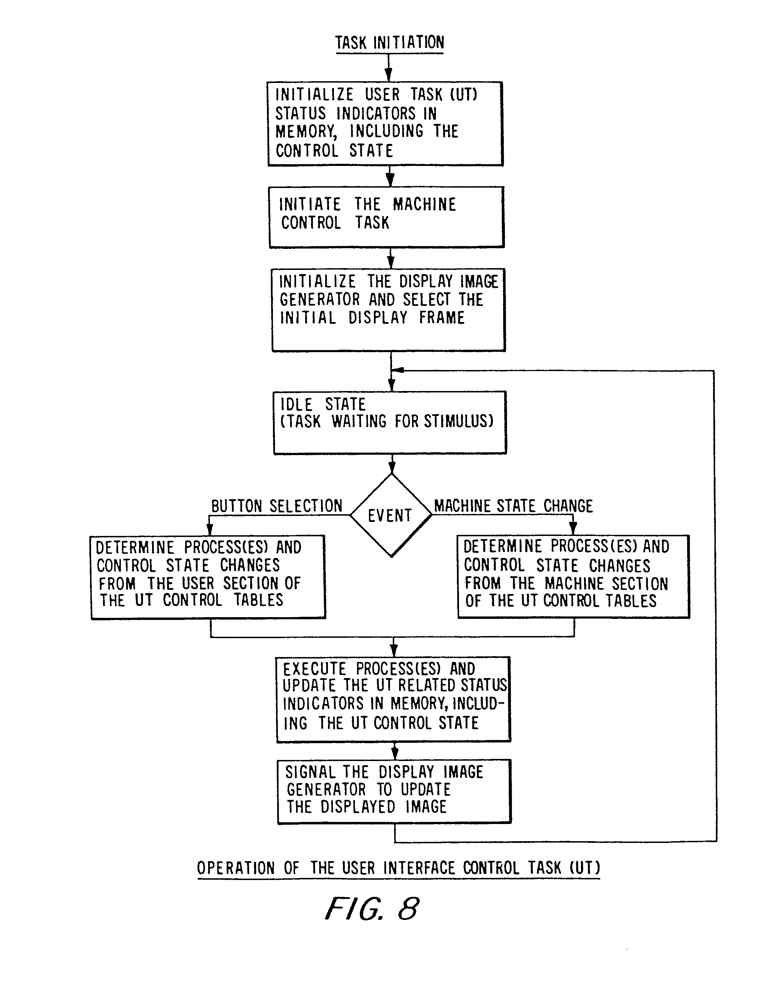

The present invention is that of the unique user interface Device (UI device) that has been developed to interface the Machine Control Task 109 with the system user. A block diagram of the UI device functions are shown in Figure 4. Control of the UI device resides in the User Interface Control Task (UT) 110. Operation of the UI device begins with power-on to the system, and results in the UT 110 performing the functions shown in Figure 8. At initialization, the UT 110 initializes its status indicators in memory and sees that the Machine Task 109 is also initialized. (If there is a power on sequence, the MT will have initialized itself. If not, the UT will cause the MT to initialize). The UT is table driven from its associated Control Tables 113, and from these tables it determines the initial frame to be presented to the user and signals that frame's identification (as an index number) to the Display Image Generator Task (DT) 111. The DT will bring up the display frame automatically from this point, and is described separately below. The UT is now in an idle state, waiting for either operator activity to be signalled from the Touch Function Decode Task (TT) 112, (or possibly from an attached optional keyboard 126), or for machine state changes to be signalled from the Machine Control Task (MT) 109, (although the latter will only happen after the machine has been started). From this point on, operation is repetitive with user commands arriving from the TT 112, the command being executed by the UT 110 through directions from its control tables 113, and with status words being maintained in the Global Data Base (GBD) 115 to reflect the state of the system. The UT 110 controls directly the MT 109 and the DT 111 through software service calls, and the rest of the processes indirectly through the indicators it sets in the GDB 115.

The Global Data Base (GDB) 115 is employed to hold the status indicators, switch settings, and system parameters needed to define the software operating states of the system, and to facilitate communication between the various software tasks and processes that make up the programmed functions of the system.

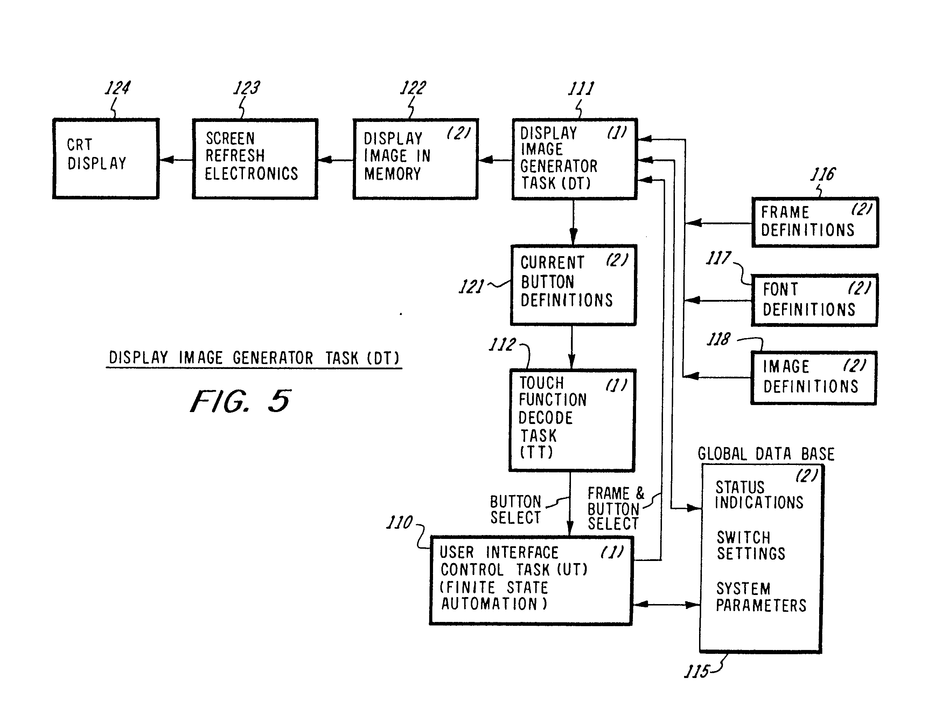

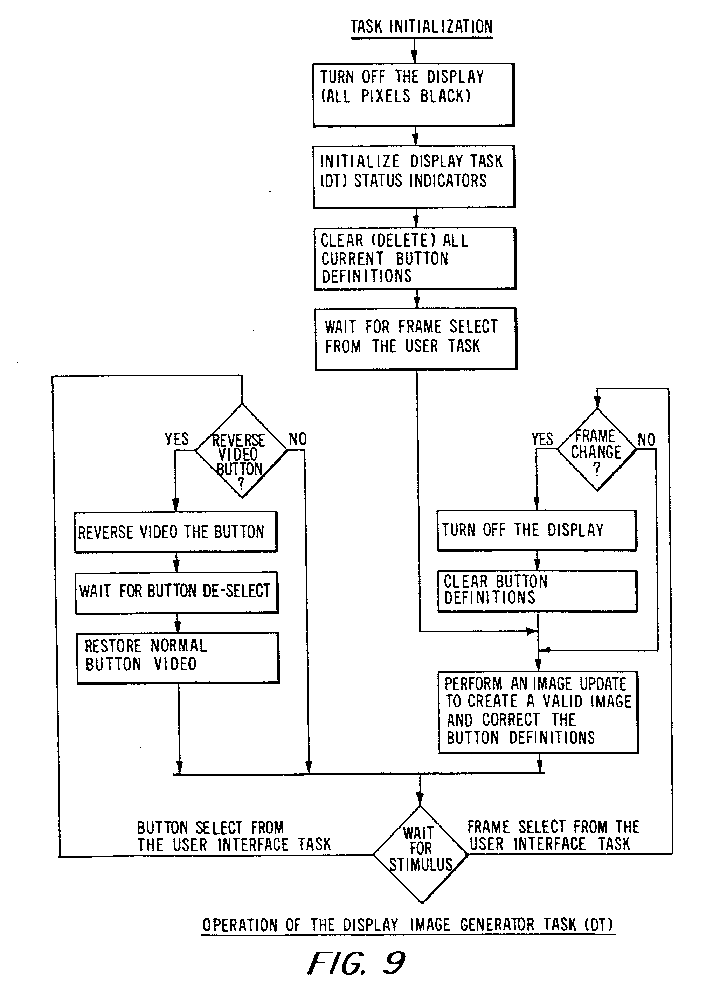

The functional organization of the display portion of the UI device is shown in block diagram format in Figure 5. The Display Image Generator Task (DT) 111 is the main software element driving the display, and its functions are shown in Figure 9, Figure 10, and Figure 11. Referring to the block diagram Figure 5, the User Interface Control Task (UT) 110 signals the Display Image Generator Task (DT) 111 with the index number of the frame that should be seen by the system user at that point in time. The DT 111 accesses the Frame Definition tables 116 to discover the makeup of the frame, the makeup being defined in terms of a series of Screen Elements (SE) to be positioned at various points on the CRT 124. The SE's exist as orthographic data (text characters) or imaginal data (images formed of bit patterns), and are defined to the DT lll through the Font Definitions ll7 for the orthographic characters, and through the Image Definitions ll8 for the imaginal images.

The DT lll follows the Frame Definitions ll6 to position orthographic and imaginal images on the screen. The actual display of the data is accomplished through creation of a bit image of the desired CRT image, pixel for pixel, into the Display Image area of the system's memory 122. The hardware display process then reads the pixels from memory and modulates the CRT beam as it scans in real time. This display system is patented separately in U.S. Patent 4,103,331.

In the creation of the display image by the DT lll, the existence of buttons on the screen for the user to "press" is particularly important, since the detection of a user touch must subsequently be decoded from an X-Y coordinate system used by the touch detect hardware (described below) to a functional signal for use by the User Interface Control Task ll0. The operation of the Touch Function Decode Task in decoding the function from the X-Y coordinates of the user's touch is described separately below. To facilitate this decoding, the DT lll maintains a table in memory of Current Button Definitions l2l. When a button's image is formed for screen display, the button's screen coordinates and function are placed into the Current Button Definitions table l2l, and when the button is removed from the screen its definition is removed from the table. Because of this, a touch of the screen can quickly be validated as a function request and the function readily decoded.

Referring to Figure 9: The Display Image Generator Task (DT) lll initializes by blacking out the display and resetting all indicators, including the button definitions. When a frame select message is received from the UT ll0 the DT proceeds to preform an image update process (described below) which will result in the frame image appearing on the CRT display. The DT is now in its normal idle state, and will respond to certain stimulus conditions. A new frame select from the UT ll0 will result in an image update process, which may or may not involve a frame change. A button select from the UT ll0 (Fig. 5) says that the user has touched a screen button and that the UT is now responding to that button, the usual result being that the DT will reverse-video the button on the screen in order to provide sensory feedback to the user (although the Frame Definitions ll6 may be set to defeat the reverse-video in certain instances). When the touch is removed, or the UT process completed,

- 8 -

the UT signals button de-select to the DT and the button's image is returned to normal video.

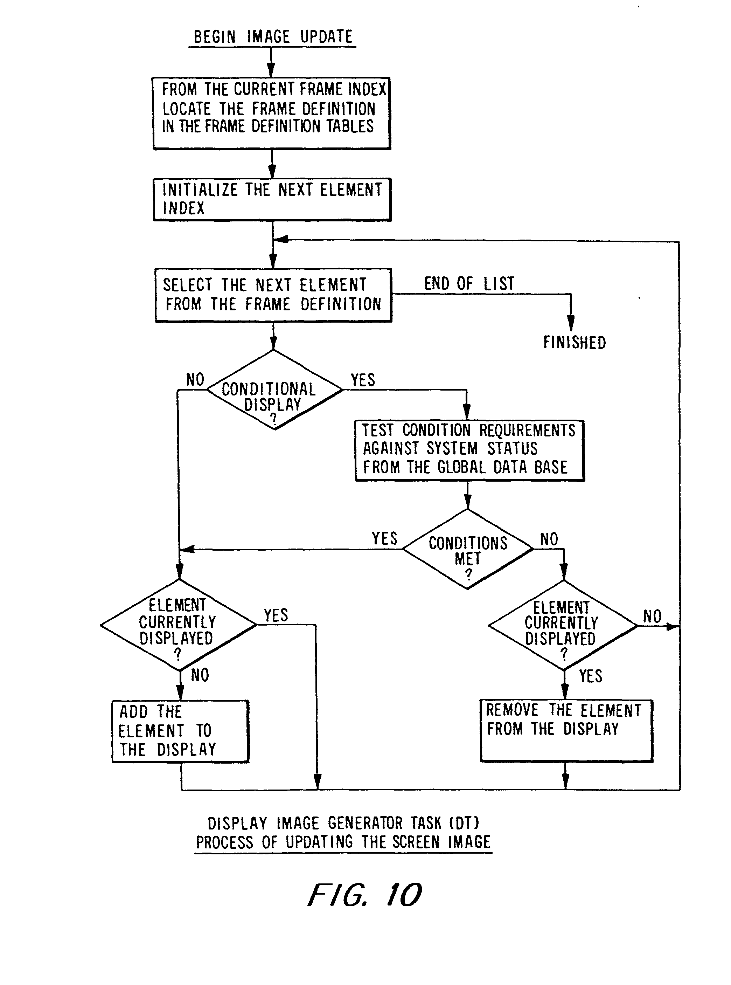

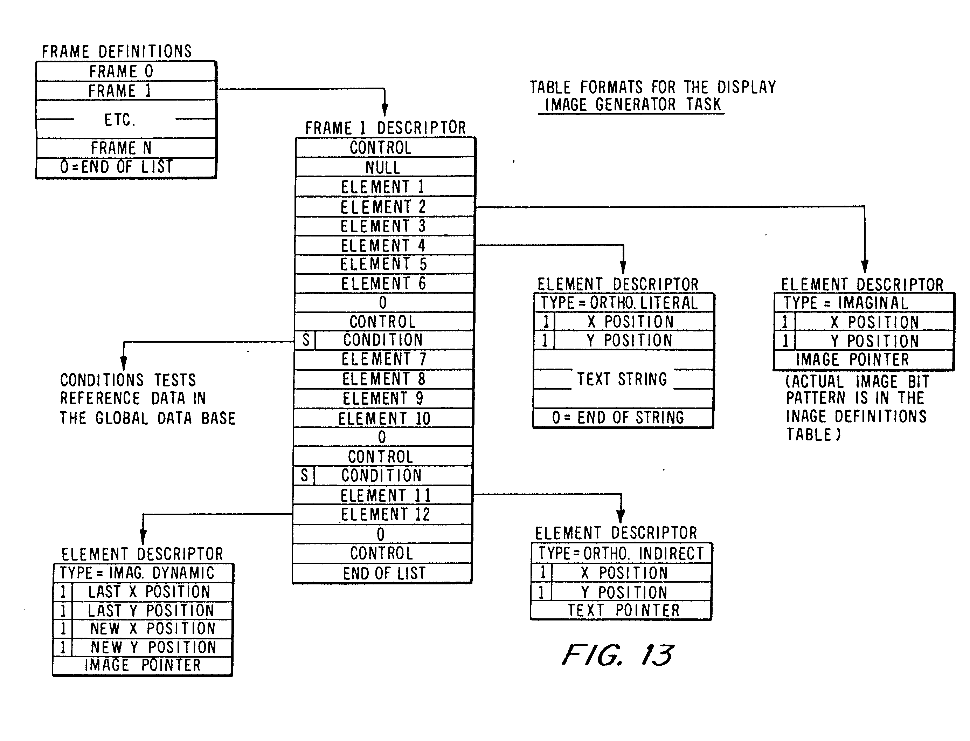

Referring to Figure 10, the process of updating the screen image is disclosed. The description of the frame to be displayed is addressed within the Frame Definitions 116, and the frame is then created as shown. The format of the tabled frame definitions are shown in Figure 13. The DT 111 works through the frame descriptor (Figure 13), evaluating the conditional tests when they occur by testing the values of the status indicators in the Global Data Base 115. If the test results in a false indication, the defined elements are skipped. If the test results in a true indication, the defined elements are included in the screen display image in memory.

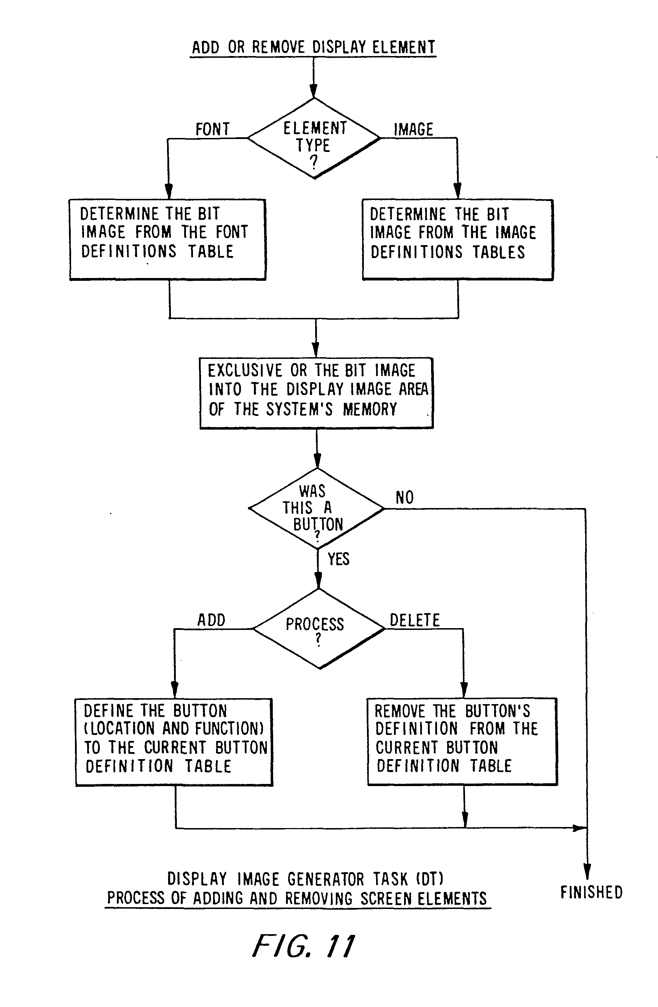

The process of adding and removing screen elements is disclosed in Figure 11. If the element is Font (character) data its bit image is determined from the Font Definitions 117 (Fig. 5). If the element is an image (such as a button), its bit image is determined from the Image Definitions 118. Regardless of whether the image is being added or removed, the element's bit image is exclusive-ORed into the Display Image area of the system's memory. If the element was already present, the exclusive-OR process effectively removes it by resetting the bits that had originally defined it. If the element was not already present, the exclusive-OR sets the defining bits and the image now appears on the screen. Note that if the element is a button, the Current Button Definitions 121 will be updated to reflect the new state of the displayed button set.

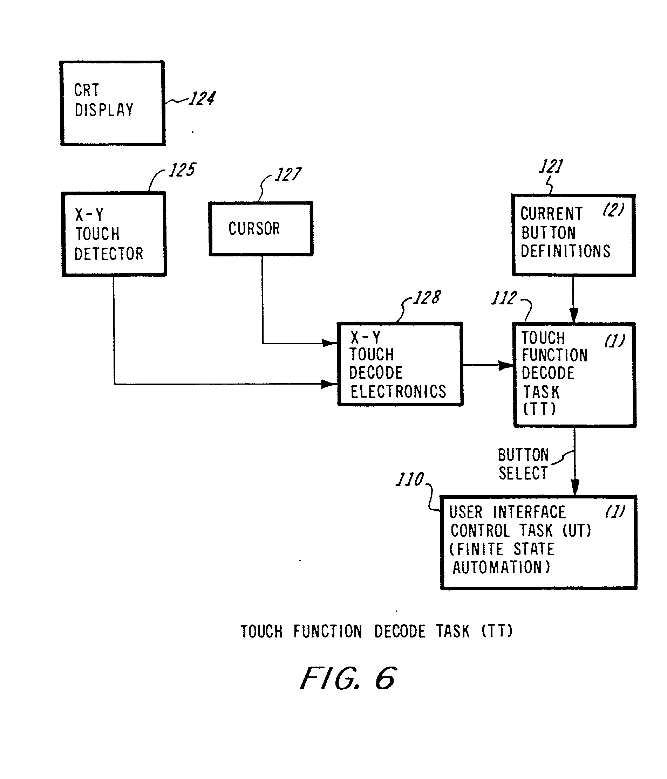

Referring to Figure 6: User input to the User Interface Control Task 110 is accomplished (normally) through the action of the user touching the CRT screen at a point where the Display Image Generator Task 111 has displayed the image of a button. The presence of the user's finger is detected by a two-dimensional array of infra-red diodes (transmitters and detectors). This is the X-Y Touch Detector 125, which detects the finger as an X intercept and Y intercept of the infrared beam matrix. The X-Y Touch Decode Electronics 128 report the interception to the Touch Function Decode Task (TT) 112 as an intercept at an X-Y position within the Touch Detector's 125 coordinate system. The TT 112 decodes the X-Y intercept to a function request by inspecting table entries in the Current Button Definitions 121. The function requested is then signalled to the User Interface Control Task (UT) 110 for processing. (As a follow-on, the UT 110 may then signal the Display Image Generator Task (DT) 111 to reverse-video the intercepted button, as described above in the discussion on the operation of the DT 111).

- 9 -

Additionally, the function of the X-Y Touch Detector 125 can be circumvented in cases where touching the screen is not appropriate as a user action, or where the operation of the diode matrix would not be reliable for environmental reasons. In these cases, a cursor control device 127 is used to position a cursor image on the screen. The cursor can then be moved by moving the cursor control 127 to select the button functions. The X-Y Touch Decode Electronics unit 128 serves as the cursor control interface, and operates in the same manner as described above with respect to button select identification from the Current Button Definitions 121.

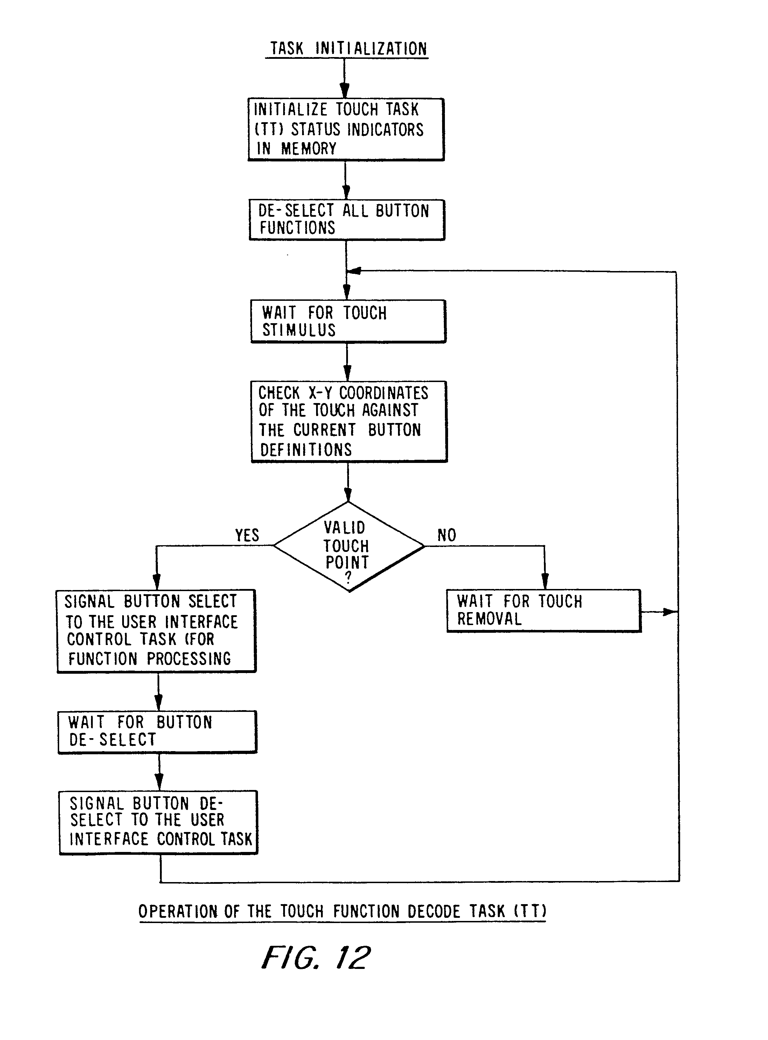

Operation of the Touch Function Decode Task (TT) 112 is shown in Figure 12. At initialization, the TT 112 resets its status indicators and then waits for the X-Y Touch Decode Electronics unit 128 to signal the X-Y coordinates of a screen touch. When a touch coördinate is received, the TT 112 inspects the Current Button Definitions 121 to identify the button touched. If no button is registered as belonging to the touch coördinates, the TT 112 waits for the touch to be removed and then re-enters its idle state. If a valid button definition is identified as belonging to the touch coördinates, the TT 112 signals the event to the User Interface Control Task (UT) 110. When the button is deselected (touch removed); that event is also signalled to the UT 110, and the TT 112 then re-enters its idle state.

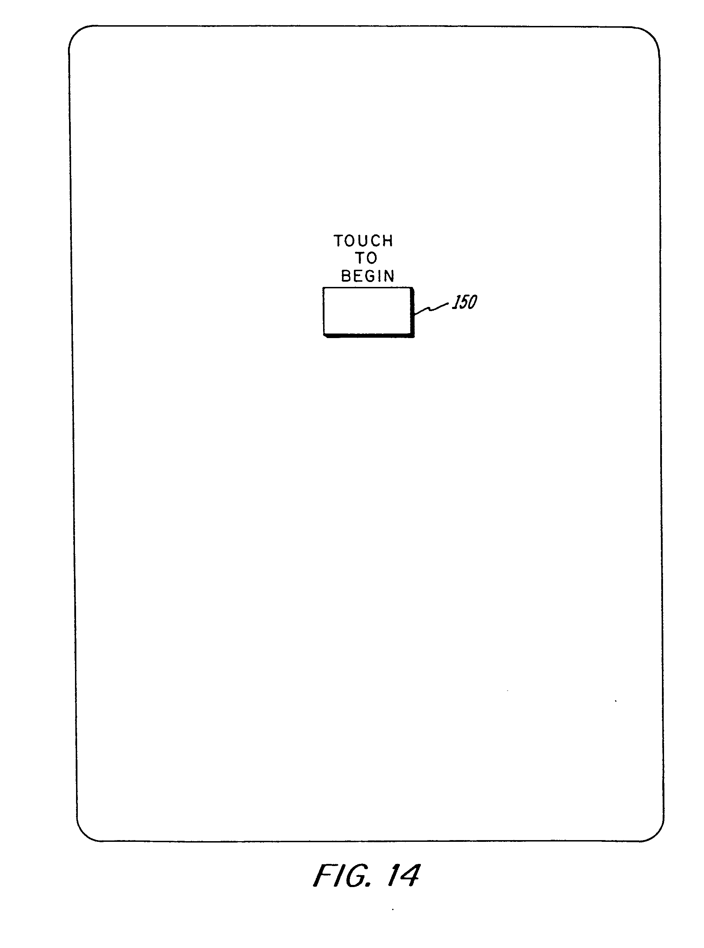

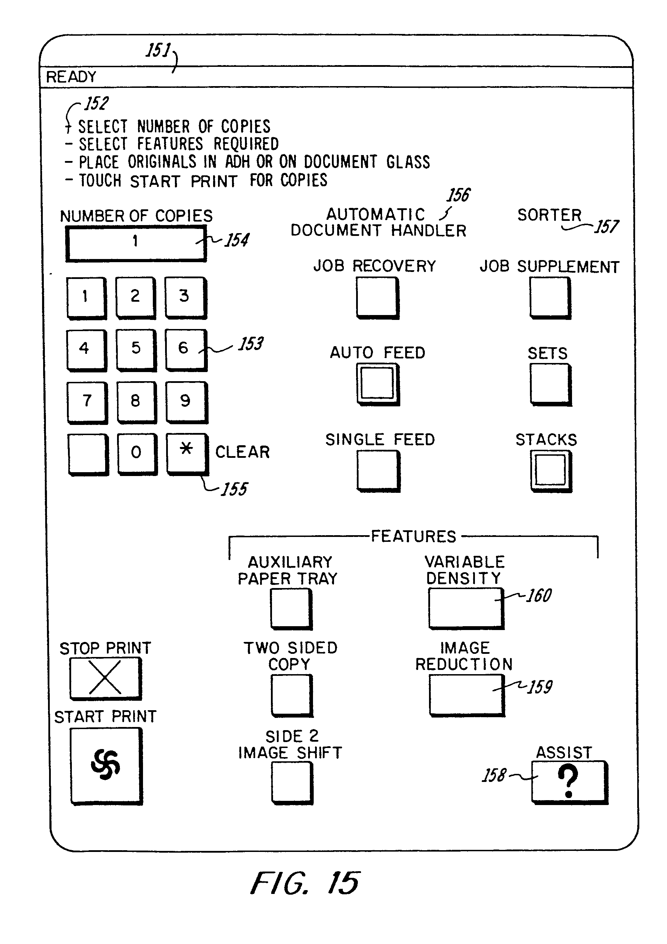

Figures 14, 15, 16, and 17 show the four frames used by the UI device for control of the Xerox 9400 duplicator. Figure 14 shows the "walking button" frame. This frame is displayed when the system is idle, and consists of a single button labeled "Touch to Begin" 150. The screen background is dark, and the button itself continuously moves in small steps across the screen. The walking button frame avoids the event of a bright image remaining on the screen for a long period of time, a benefit since the bright image would eventually result in phosphor burn. The walking button 150 is the only illuminated element on the frame (Figure 14), and since it is constantly moving about on the screen the possibility of phosphor burn is eliminated. When the user wishes to use the machine, he touches this "Touch to Begin" button 150 and a new frame, shown in Figure 15, appears on the screen.

Figure 15 shows the basic user frame. A black bar across the top of the frame 151 displays the word "READY", informing the user that the system is ready for use. This message would read "NOT READY" should that be the case, as when, for example, the copier is waiting for the fuser to reach operating temperature. Simple instructions 152 appear at the top of the frame, and again these can change to reflect immediate requirements. The image of a standard keypad 153 appears at the top left of the frame, and allows the user to enter a copy count by touching the numerical keys in the usual fashion. The count entered is displayed in the window 154 above the keypad, and can be cleared to zero at any time by touching the CLEAR key 155. Buttons controlling system operations, such as the Automatic Document Handler controls 156 and the Sorter controls 157, operate in the usual way of buttons in general, the only modifications being that (1) they are images on the CRT display instead of physical buttons, and (2) when a function is enabled the corresponding button reverse-videos (and remains that way until the function is reset). The exception to usual copier operation occurs with the buttons labeled ASSIST 158, IMAGE REDUCTION 159, and VARIABLE DENSITY 160. These buttons result in new frames replacing the basic frame. The basic frame times out under program control if not used for two minutes, resulting in the reappearance of the walking button frame (Figure 14).

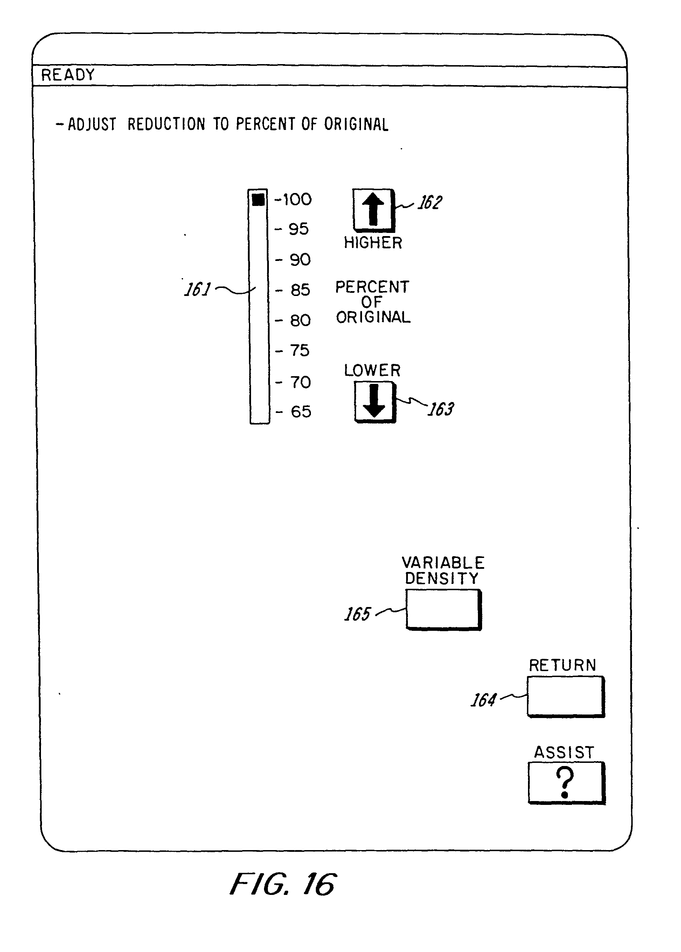

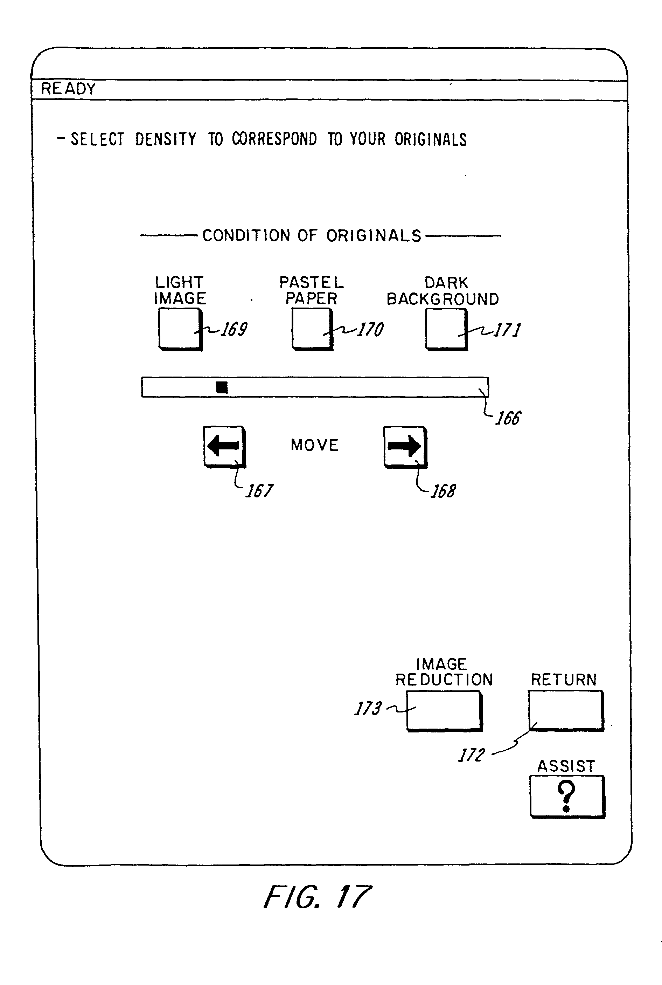

Should the user become uncertain of his next step, he can touch the ASSIST button 158 and a frame of instructions will appear to assist him in using the system. A more interesting effect occurs with the IMAGE REDUCTION 159 and VARIABLE DENSITY 160 buttons, since these bring up operational frames as shown in Figures 16 and 17. Referring to Figure 16, touching IMAGE REDUCTION 159 causes this frame to appear so that the user can select the degree of reduction required. The current setting of the reduction hardware is shown at all times on the scale 161 as a percent reduction of the original. The user controls the degree of reduction by touching either of the two buttons 162-163, which result in the reduction hardware moving to increase or decrease the actual reduction effect. The scale pointer 161a is driven in real time to provide instantaneous feedback to the user.

When the user is satisfied with the reduction adjustment, he can either return to the basic frame (Figure 15) by touching RETURN 164, or go directly to the variable density adjustment by touching VARIABLE DENSITY 165. Note that touching VARIABLE DENSITY on either the basic frame or the reduction frame will cause the variable density frame to appear, i .e., it is not necessary to back up from the reduction frame to the basic frame in order to reach the variable density frame.

Referring to Figure 17, operation of the density adjustment is similar to the operation of the reduction adjustment described above. The indicator bar 166 shows the current density setting at all times, and the operator can adjust this setting to any point with the buttons 167 and 168. In addition to the continuous adjustment provided by buttons 167 and 168, three pre-set adjustments can be reached instantly by touching the appropriate button: LIGHT IMAGE 169, PASTEL PAPER 170, and DARK BACKGROUND 171. When the user is satisfied with the density adjustment, he may directly return to the basic frame by touching RETURN 172, or go directly to the reduction frame by touching IMAGE REDUCTION 173.

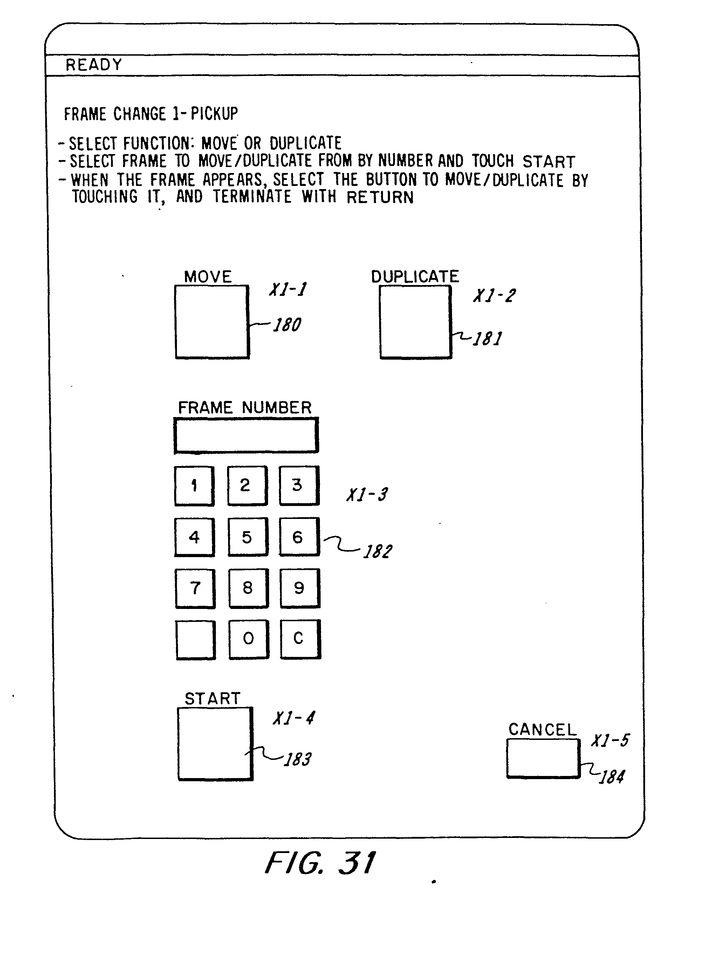

An additional feature of the system is that the user can perform a limited reconfiguration on the frames to meet the requirements of specific operating environments. For example, in a situation where light originals were a major part of the duplication requirements, it would be inconvenient to have to follow the progressive disclosure process to the variable density frame (Fig. 17) for virtually every reproduction task. Hence the Change Frame feature has been implemented to allow, for example, the user to duplicate the Light Image button 169 from the variable density frame (Fig. 17) onto the basic frame (Fig. 15), where it would be directly available to the operator. To activate this feature the user turns a physical control key, called the Function Key, to the "Change Frame" position. After this is done, the user touches the Touch To Begin button 150 (Fig. 14), and subsequently receives the first of two frames that control the Change Frame function. The first frame (Fig. 31) asks the user to specify whether the function will be moved (that is, deleted from one position and placed in another; probably, but not necessarily, on a different frame) or duplicated (i.e., the function will be moved without being deleted from its original position, presumably onto a different frame).

After selecting Move 180 or Duplicate 181 (Fig. 31), the user keys in the frame number (through the keypad 182) of the frame where the function is currently in residence. The user then touches the button whose function he desires to move or duplicate. In the case of a move, the button is deleted from the selected frame at this time. For duplication, the button simply reverse-videos to provide optical feedback that it has been selected. The user then touches either Assist or Return to return to the Change Frame control frames (both buttons may not appear on all frames, hence either may be used for the Return function in Change Frame mode). For example, to duplicate the Light Image function 169 (Fig. 17) so that it appears on the basic frame (Fig. 15) as well as on the variable density frame (Fig. 17), the user would select the variable density frame (Fig. 17) as described above, touch the Light Image function button 169 (which would reverse-video), and then touch Return 172.

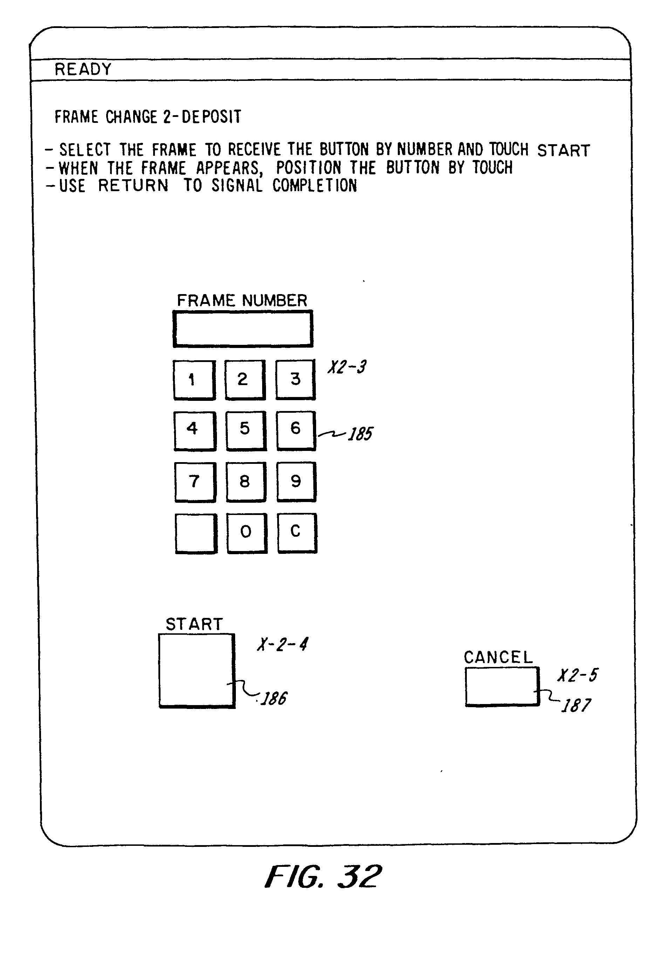

The second of the two Change Frame control frames (Fig. 32) now appears. The user selects the number of the frame onto which the selected function will be deposited. For our example, we wish to move the button to the basic frame (Fig. 15), so this code is entered on the keypad 185 (Fig. 32) and the Start button 186 is touched. The selected frame (Fig. 15 in the example) now appears. To deposit the button on the frame, the user simply touches the frame where he would like to position the button. If the location is valid, the button appears. (Specifically, it would be invalid to place a button on top of existing material, and the space selected must be large enough to receive both the button and its associated function label). The button will move across the screen, following the user's touch, as long as the position selected is valid. As the button moves, it is automatically aligned with the infra-red touch sense matrix.

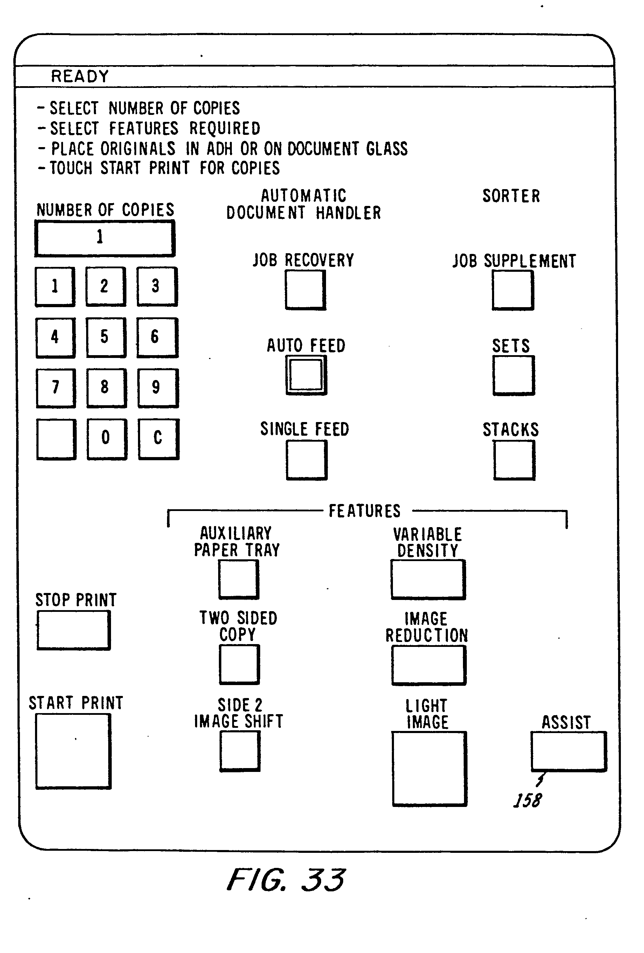

When the user is satisfied as to button placement, he removes his finger from the screen (the button remains) and touches the frame's Assist or Return button (the Assist button 158, Fig. 33, is used for this example). For our example, we have duplicated the Light Image button 169 from the variable density frame (Fig. 17) to the basic frame (Fig. 15 originally, now Fig. 33), and positioned the new button near the existing Assist button 158 (Fig. 33). Note that since we duplicated the function, as opposed to moving the function, the Light Image button 169 now appears on two distinct frames. That is, the function is still on the variable density frame (Fig. 17), so that frame is functionally complete, and the function is additionally now on the basic frame (Fig. 33) for ease of use by the operator.

Both Change Frame frames (Figs. 31 and 32) contain Cancel buttons 184 and 187. The Cancel buttons allow the user to cancel the move or duplication operations any time prior to selection of the Return button (used to signal completion of the operation). If a deletion is cancelled, the operation is simply terminated. If a move is cancelled after the moving button has been selected (and thus removed from the source frame), the button is returned to its original frame and original position.

-13-

The ability to reconfigure frames may be used in the context of defining a button to represent a complete job step or job where the job step or job consists of a sequence of steps already implemented. This is the equivalent of defining a "command file" type of operation typically implemented in a UCL (User Command Language) for a computer application. The keyboard may be used to define a label for the newly defined button.

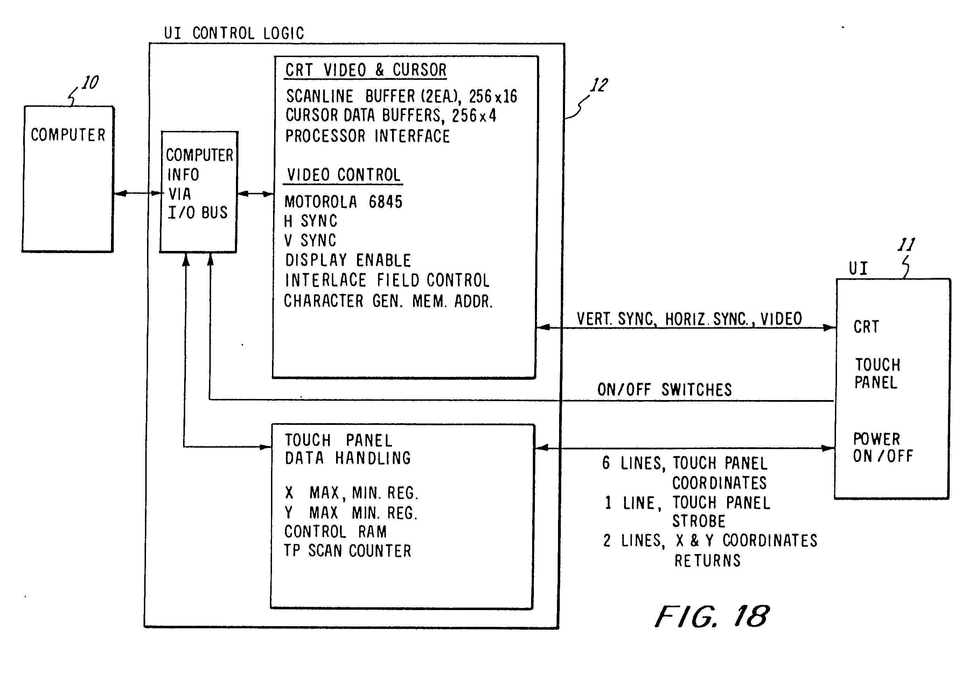

Figure 18 is an overall block diagram of the circuits required to drive the User Interface (UI) 11. The UI 11, which comprises a CRT and the touch panel, is coupled to the computer 10 through an interface which will be referred to as the user interface logic 12 (UIL). The computer 10 controls the system, not shown, through any well-known means.

The User Interface 11 has three major components, the CRT, the touch panel and a power on-off switch for the entire system.

The CRT is driven by signals typical of any CRT, vertical sync, horizontal sync and video, all of which originate in the UIL 12 as shown. The touch panel interface consists of six lines for the touch panel coordinates, a touch panel strobe line, and the X and Y coordinate return lines, as shown.

The six touch panel coordinate lines are driven by a six-bit counter in the UIL 12, the six lines being decoded to integrate one X and one Y matrix row and column at a time. There are 37 LED and photo-sensitive transistor pairs in the X (horizontal) direction, and 41 in the Y (vertical) direction. The 64 bit (six line) counter therefore can service each row and column once per counter cycle. If a light beam of the matrix is interrupted, there will be a return to the UIL 12 on the appropriate return line at the time a strobe and the associated count is presented to the UI 11. After a complete cycle, an X coordinate and a Y coordinate will have been received by the UIL 12, determining a point on the two dimensional CRT face that has been touched.

A slight complication is created by the ambient room light which must be distinguished from the LED beam. This is accomplished by biasing the light-sensitive transistor so that there is no reaction to the ambient light conditions. This may be done automatically by first applying an appropriate control signal to a selected photosensitive transistor to saturate it with ambient room light and then turning on the corresponding LED to sense additional light.

In this particular system, the matrix was designed to be driven by a counter which stops at a count of 37 in the horizontal direction and 41 in the

-14-

vertical. As the count runs past these numbers, interrupts will be generated. To prevent these various responses a RAM control memory is supplied in the UIL 12 which maps the inputs into valid outputs, thus a non-interrupt is always produced, ultimately, for columns numbered greater than 37 and rows numbered greater than 41.

This same RAM has an additional use. A matrix row or column may be defective, and generate an interrupt continually. This problem could also be discovered by a diagnostic run at turn-on time, and the control RAM programmed automatically to disregard interrupts on the defective channel. However, the matrix will still be usable for two reasons. First, a touching of the panel usually interrupts two or more channels in any direction so that the loss of a channel would not affect the operation. Second, the software may be written to shift the display "keys" away from a defective row or column.

Another complication arises when more than one row or column registers an interrupt. In fact, this is usually the case since the matrix is one quarter of an inch between rows and columns, and the operator's finger will usually intersect several in each direction. In a display of keys an uncertainty may arise. The preferred solution is for the software to compute the center point of the two or more interrupts in each direction, and use the key that encloses, or is nearest to, that point.

To accomplish this function, the UIL 12 contains X and Y max/min registers, a control RAM functionally described above and the touch panel scan counter, also previously described, all of which will be described in more detail below.

In this CRT one odd and one even "fill" are interlaced to produce one "frame", and the vertical sync pulse issued to start a new frame. The scan counter completes its count in approximately three-fourths of the frame time. Therefore, the vertical sync pulse is used to reset and restart the touch panel scan, and the results are latched out to the UIL 12 during the retrace time directly before the next vertical sync pulse. In this embodiment, there is one sync pulse every 12.5 m sec, 80 fills per second and 40 frames per second.

At the end of each frame the X and Y coördinates are latched out from the UI 11 on the return lines to the data-handling portion of the UIL 12 into the X and Y max/min registers, and therefrom, to the computer 10 which interprets this information into a suitable machine command or into the registered UI display.

The actual control of the UI 11 is accomplished by the CRT video handling and control portion of the UIL 12, and more specifically by a Motorola type 6845 CRT controller LSI chip. The CRT video handling circuit provides horizontal sync, vertical sync, interlaced field control and character generator memory addressing. In this embodiment, there are 875 scan lines, and about 612 dots per scan.

The CRT video handling part of the UIL 12 comprises two scan line buffers, each implemented from four buffer register parts, each 256 by 4 bits, a cursor data buffer and a processor interface through which the data transfer takes place.

The process is as follows. A complete display bit map is prepared in the main memory of computer 10 as explained in U S Patent No. 4,103,331. The CRT controller chip generates a vertical sync pulse at the beginning of the frame, which is used as a display enable. Thereafter, for each time that a scan line of video is required, a system interrupt is issued to the computer 10 which responds by filling the scan line buffer with 612 video data bits. In fact, there are two scan line buffers, one being loaded while the other is supplying video to the UI in real time.

As shown in Figure 18, the CRT video handling portion of the UIL generates a Display Enable signal which signifies that the scan has settled at the top of the screen and is ready to accept video. The series of interrupts are then generated to produce the frame. However, at these interrupts, the scan buffers are not uniformly filled. The bandwidth may be significantly reduced by setting a horizontal tab counter instead of actually sending video which is all white. Then, as the tab counter is counted down, no video (which is interpreted as white video) is transmitted from the buffer. When the tab counter reaches zero, video is again output. A numerical example would be as follows: Assume there are 10 words of white video, and then 15 words of random video in a particular scan line. The tab counter would be set to 10 and the 15 words of random video loaded into the buffer. To read out, first the scan buffer counts down 10 counts, then it outputs the 15 words of random video. The result is a decreased bandwidth requirement between the computer 10 main memory and the UIL 12.

Between the UIL 12 and the UI, data transfer of four parallel bits per word are timed by a video clock at a rate compatible with the CRT timing.

-16-

The cursor handling portion of the UIL 12 comprises the cursor control circuits and a cursor buffer. In this system a cursor is defined by a rectangular area within which the cursor is contained, and also by a shape (arrow, bar, dot, etc.). A cursor data buffer is loaded with the cursor shape which is then coupled out to the scan line buffer in the same way that a character generator would, to generate a particular video pattern. An electronic pointer is used to define the upper left corner of the cursor to position the cursor and the screen. In this embodiment, the cursor is defined within a 32 x 32 dot square, and is simply ORed with the video to produce a final image. Of course, provisions can be made to reverse the cursor color to allow it to be the reverse of the background video color.

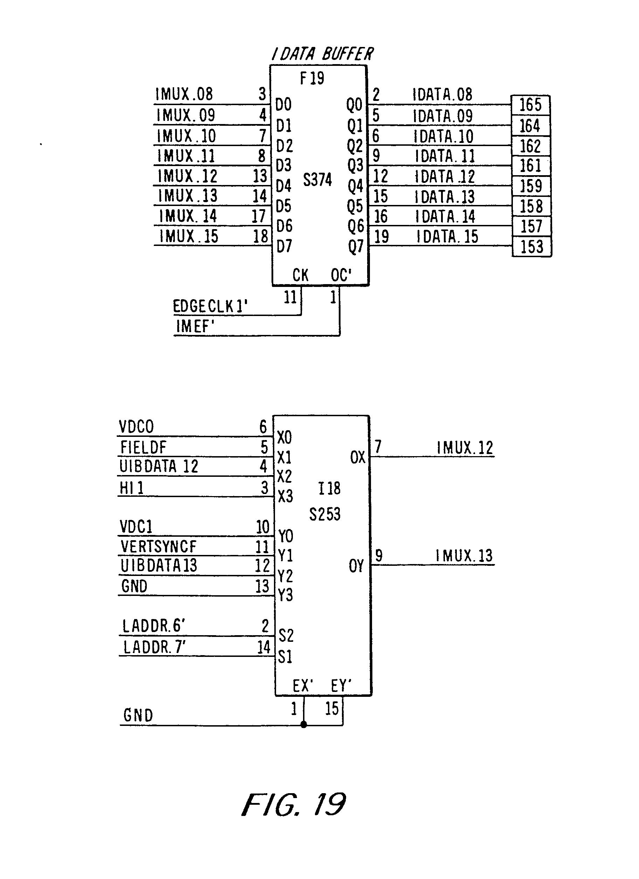

The detailed schematics will now be discussed. Figure 19 is the UI control logic interface to the computer or processor 10 which couples system data to the processor. Various signals are multiplied through eight multipliers one of which, i18, is shown, onto a total of 16 Mux lines, two of which, IMux 12 and 13, are shown, and then buffered through two data buffers one of which, f19, is shown. Typical signals are vertical and horizontal sync, diagnostic flags, video control signals, touch panel X and Y coordinates, odd-even fill, and power on-off (which initiates the power-down sequence). The outputs are finally coupled onto the computer input data bus, lines Idata 00 through Idata 15.

The computer in this embodiment has a seventeenth parity input line, Idata 16, not shown in this diagram.

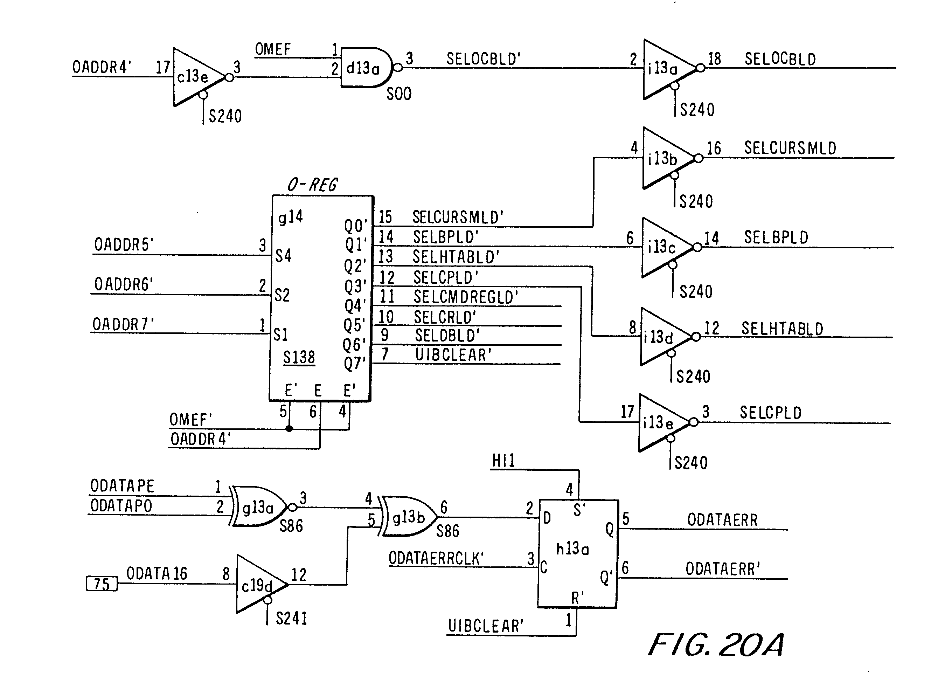

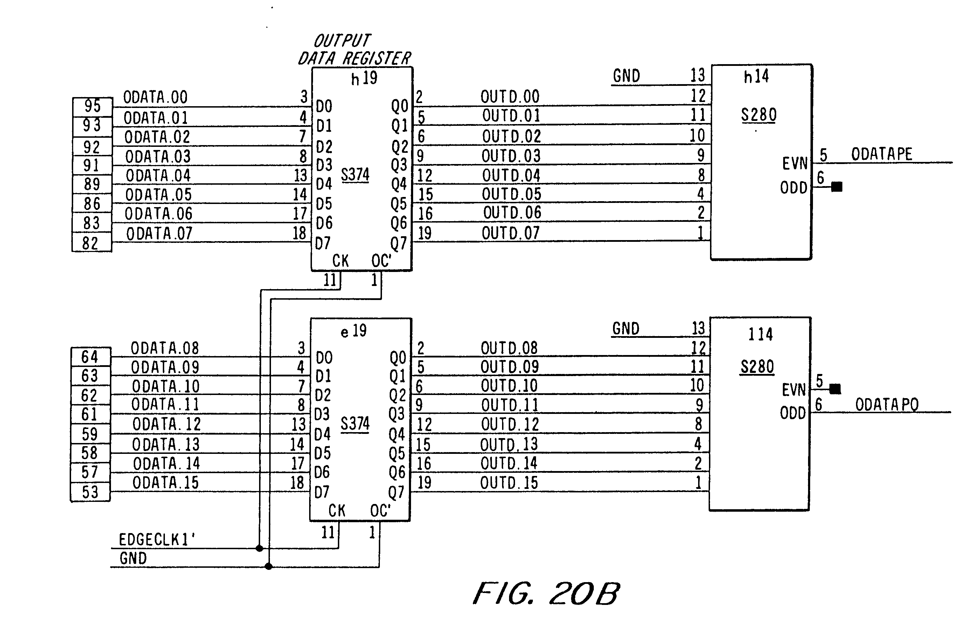

Figure 20 is a schematic of the computer or processor output lines to the User Interface control logic unit, the UIL 12. The O register G14 is an instruction decoder which translates the contents of several processor output address lines Oaddr 5 - 7 into specific discrete control line commands. Examples are the discrete lines to set the cursor memory load, SelCuvsMLd, set buffer pointer load, SelBPLd, set tab pointer load, SelHTabLd, and set cursor pointer load, SelCPLd.

Register h19 and e19 are data buffer registers for the computer output data lines Odata 00-15. Parity generators h14 and l 14 generate odd and even parity bits for the data and the processor parity bit, Odata 16 is handled in separate logic as shown.

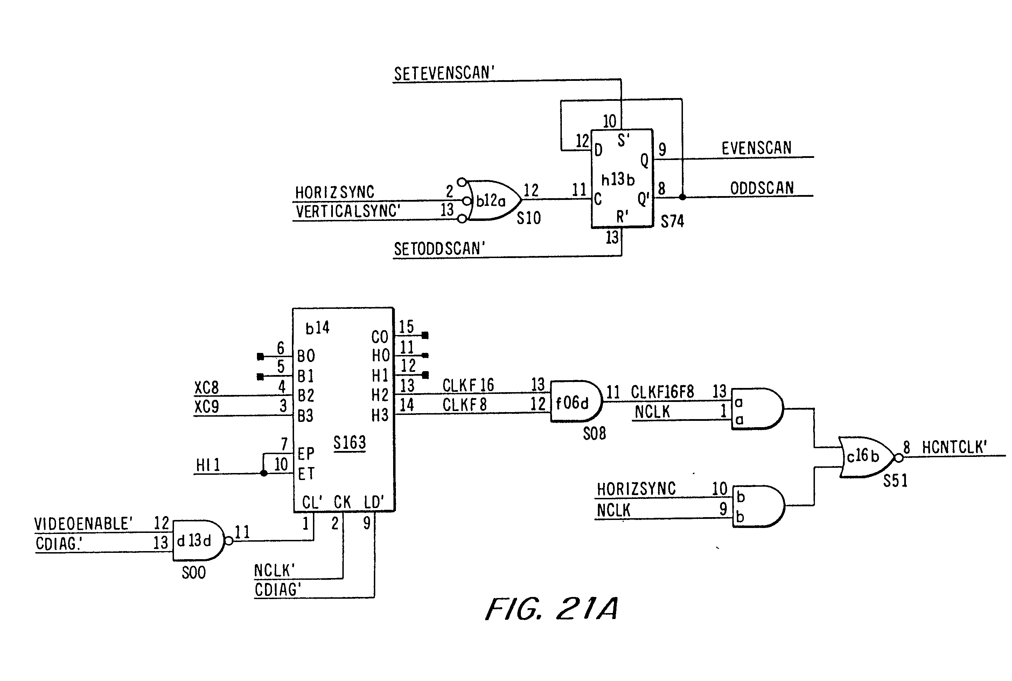

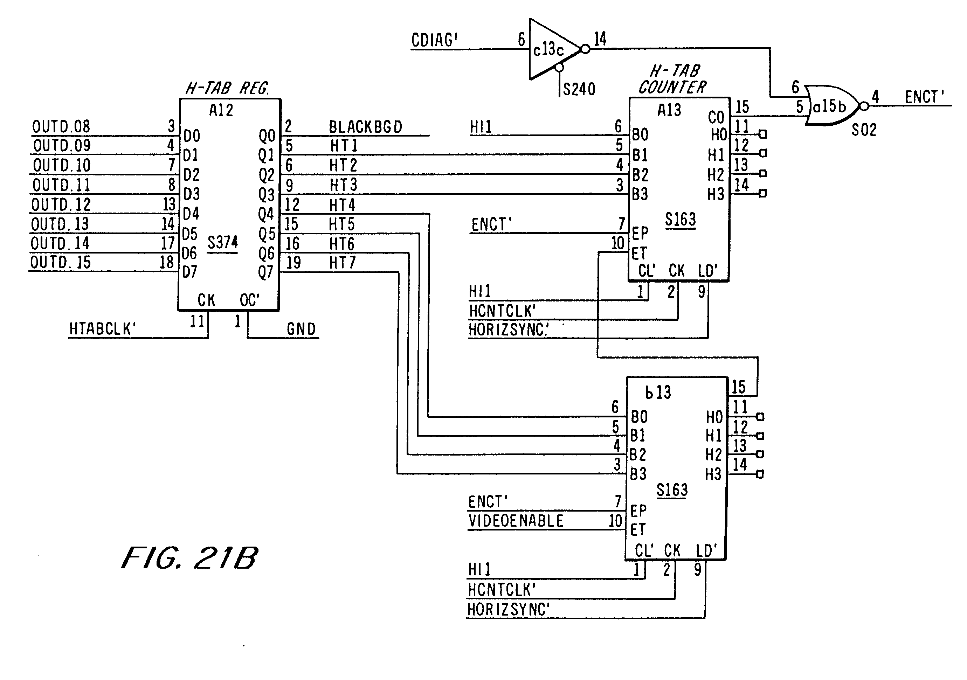

Figure 21 is the circuit which processes the horizontal tab. Eight buffered processor output data lines OutD 08-15 are buffered in register a12 and are used to set the tab counter a13 and b13. The control for this counter is

supplied by counter b14 which produces the clock for counter a13, b13 under the appropriate conditions. In other words, the Horizontal Tab Counter a13 and b13 is parallel loaded through the H-Tab Register from the processor and then counted down with clocks from counter b14. The purpose of this Tab counter is as described above.

In the upper part of Figure 7, flip-flop h13b generates a signal to indicate whether the CRT is on an odd or even scan, as indicated by the signals Buffer 2 and Buffer 1, respectively. As shown, the sync pulses trigger the flip-flop h13b to alternate on every scan. The set and reset lines are for diagnostic purposes only. In all cases, the original signals are generated by and coupled from the processor.

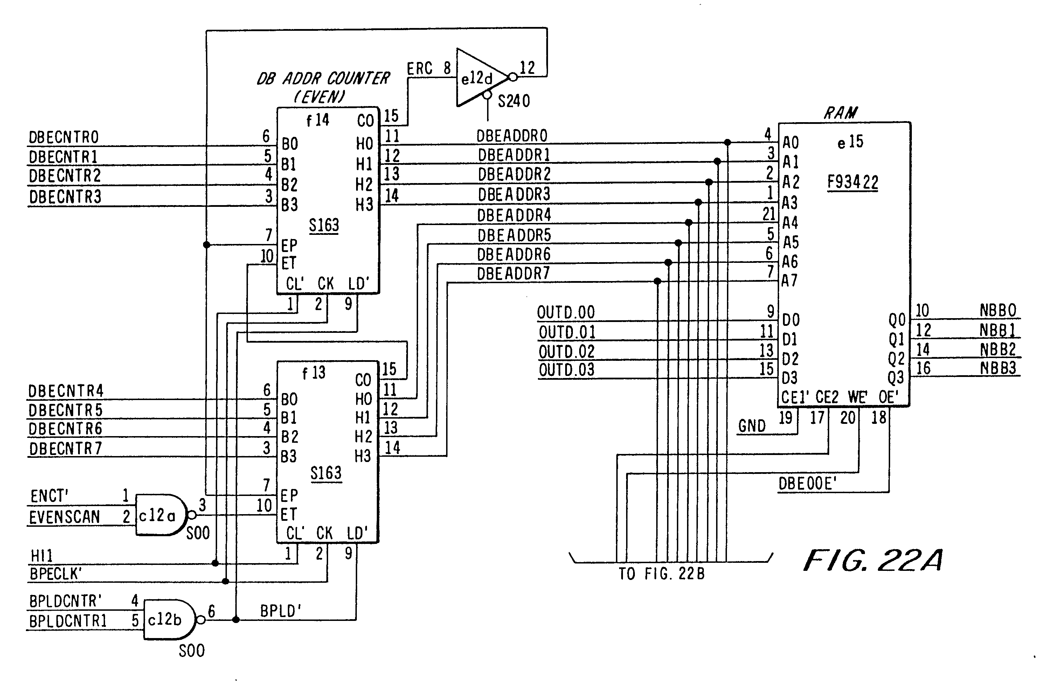

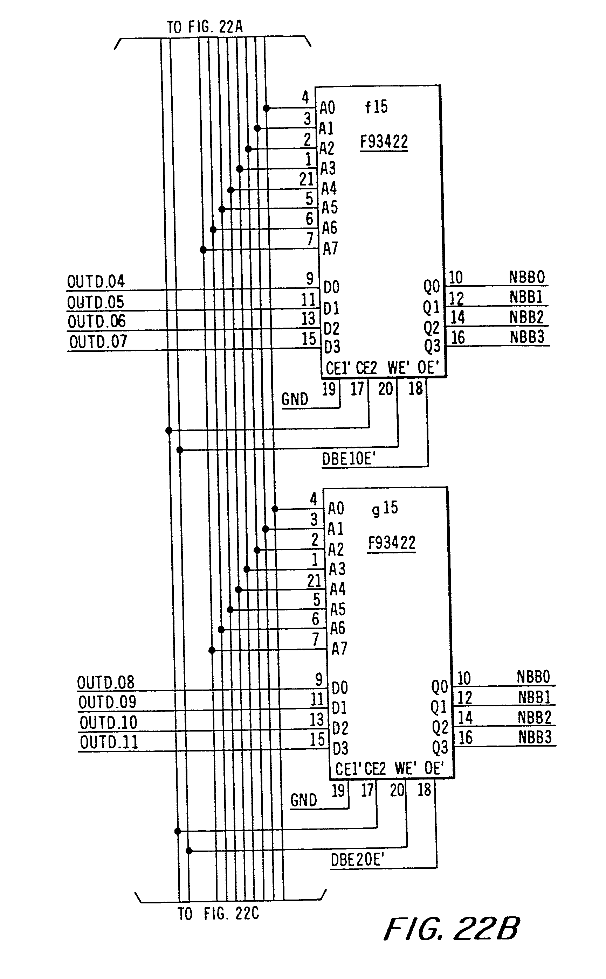

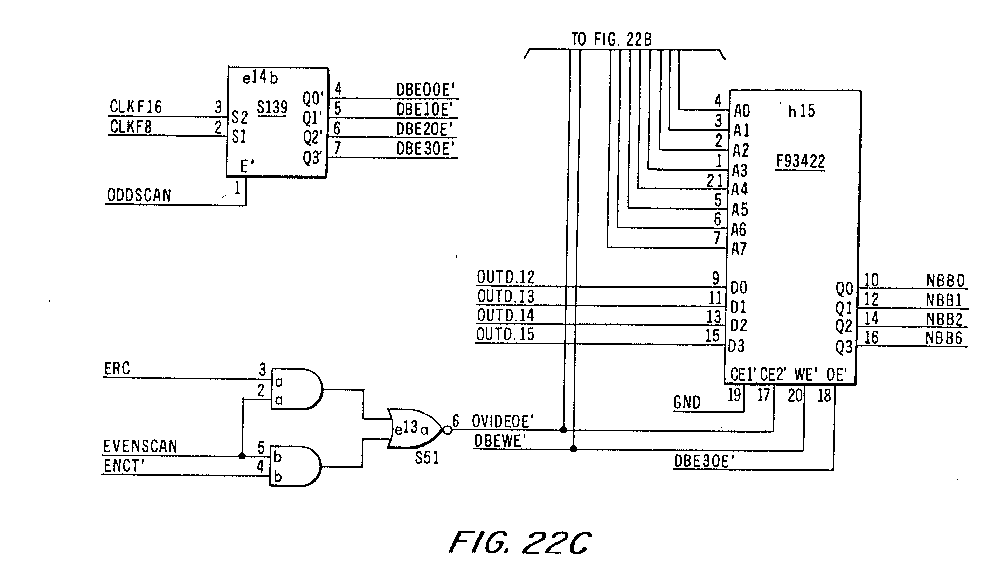

Figure 22 is data buffer No. 1 for even scan line data. Buffer No. 2, for odd scan line data, is identical and therefore not included. During the loading of data from the processor, one is being loaded while the other is supplying video to the CRT. Each F93422 RAM has a capacity of 256 x 4 bits resulting in a total buffer capacity of 256 x 16 bits. Two counter devices, f14 and f13, are used to implement the data buffer address counter, the eight-bit output, DBEAddv 0-7 supplying the addresses for the RAM's e15, f15, g15 and h15. The RAMs may be parallel loaded from the processor on lines OutD 00-15 and are selected and enabled by decoder e146. The clock input to the address counter f14, f13, line EnCt' is supplied from the H-tab Counter a13, b13 of Figure 7. The data buffer counter f14, f13 may also be parallel loaded on lines DBCntr 0-7 from the processor. The final output is four parallel bits of video data coupled out on lines NBB 0-3.

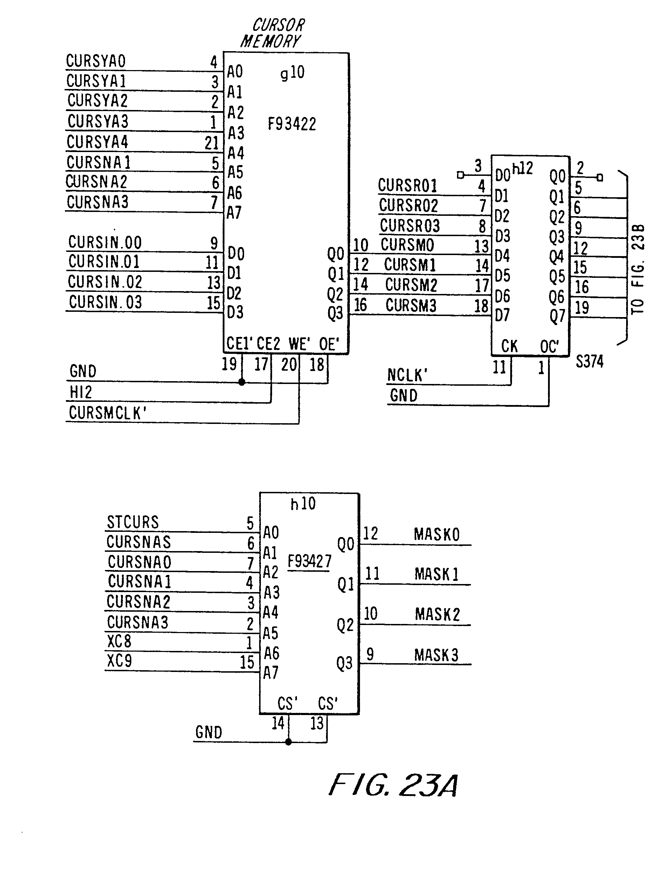

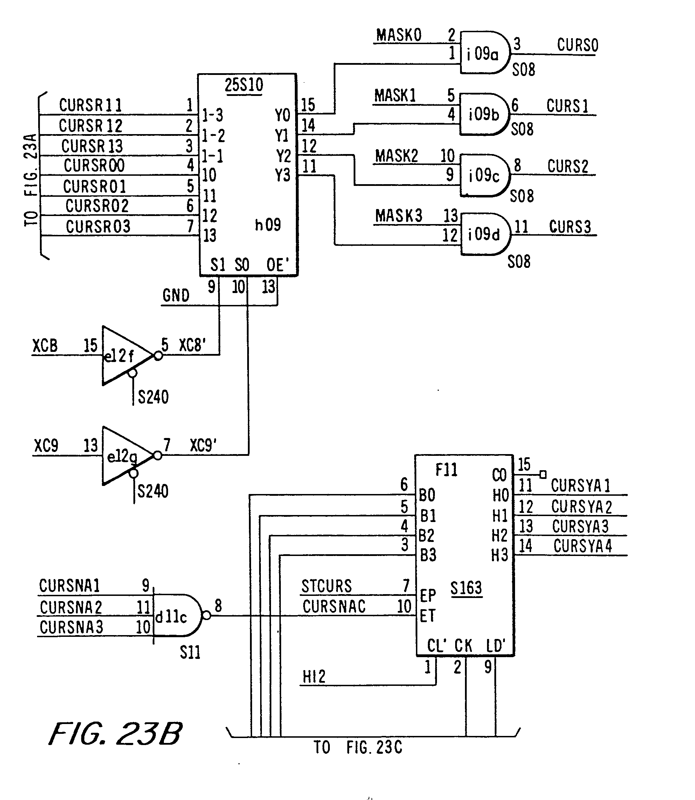

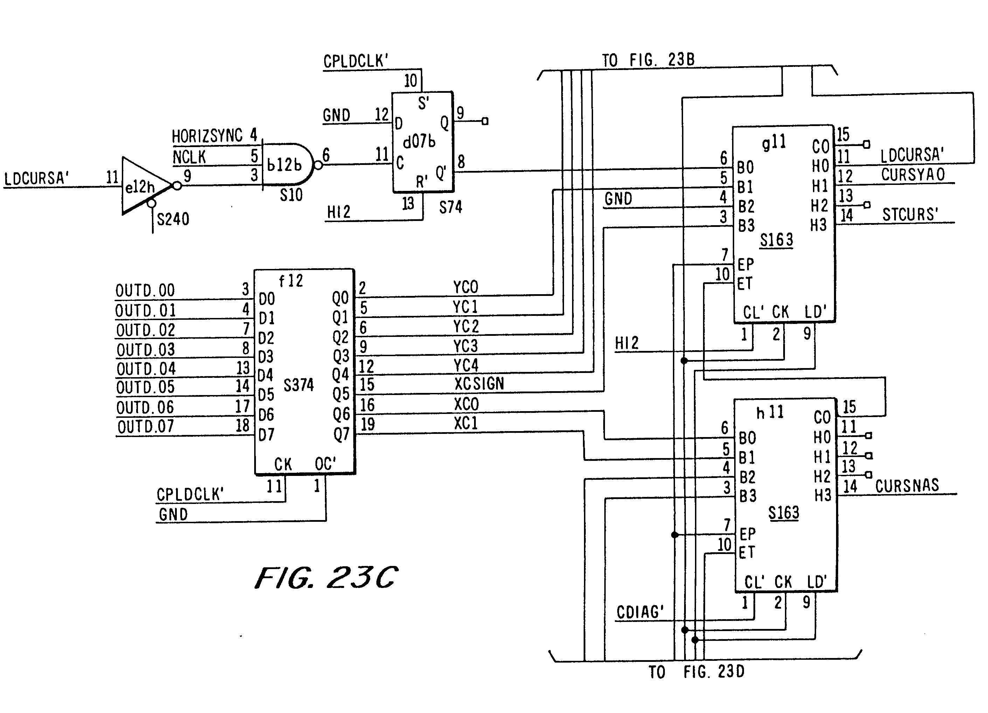

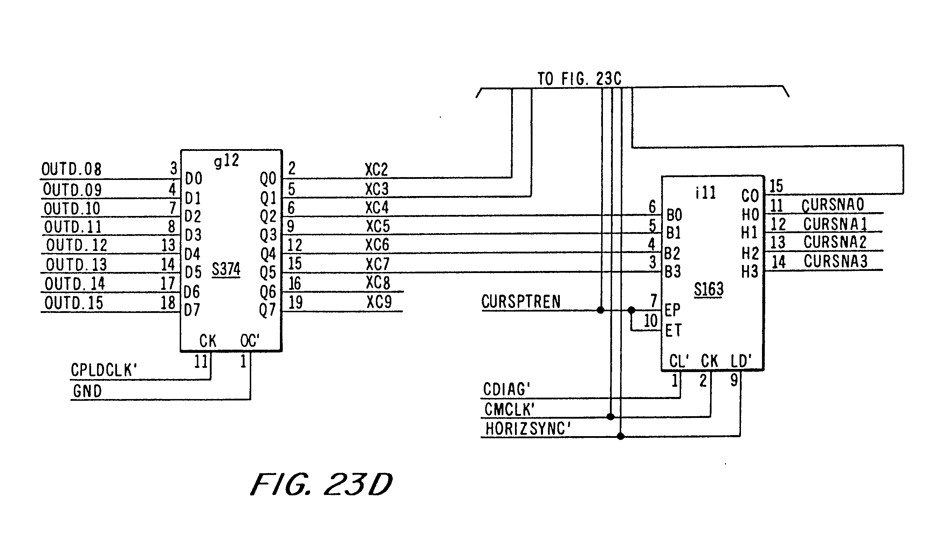

Figure 23 is a schematic of the cursor logic, including the cursor memory g10, a 256 x 4 bit RAM. The eight address lines CURSYd 0-4 and CURSNa 1-3 are the cursor pointer lines from registers f11 and l 11. The other main components are the cursor register f12 and g12 which is loaded by the processor, and the cursor counter, g11 and h11, which receives a count in parallel on inputs B0-B3, and counts down from the start of the scan line (HOR12Sync) using the cursor clock (CMClk) to start the cursor at the proper point on the scan.

The cursor memory g10 stores the cursor image itself which could be an arrow, a bar, or any other simple image which can be created on a 32 x 32 bit matrix. As shown, the cursor image is output four parallel bits at a time. However, since the cursor must be able to start on any bit within each

-18-

four-bit nibble, the cursor mask PROM (256 x 4 bits) h10 is provided to output signals MASK 0-3 to gates 109 a-d to allow the cursor image, as buffered through register h12 and multiplier h09, to begin on any bit. The XC8 and XC9 inputs to gates e12f and e12g are received from the processor and control multiplier h09, the total result of the masking function being to enable output bits from the cursor memory g10 at the appropriate point within the four-bit nibble.

Two cursor start signals are required, one supplied by counters h11 and l 11 to start the cursor at the appropriate point on the scan line (x direction), the other supplied by counters f11 and g11 to start the cursor on the appropriate scan lines (y direction). As shown, some of these outputs are used (CURSYa 0-4) to address the cursor memory g10.

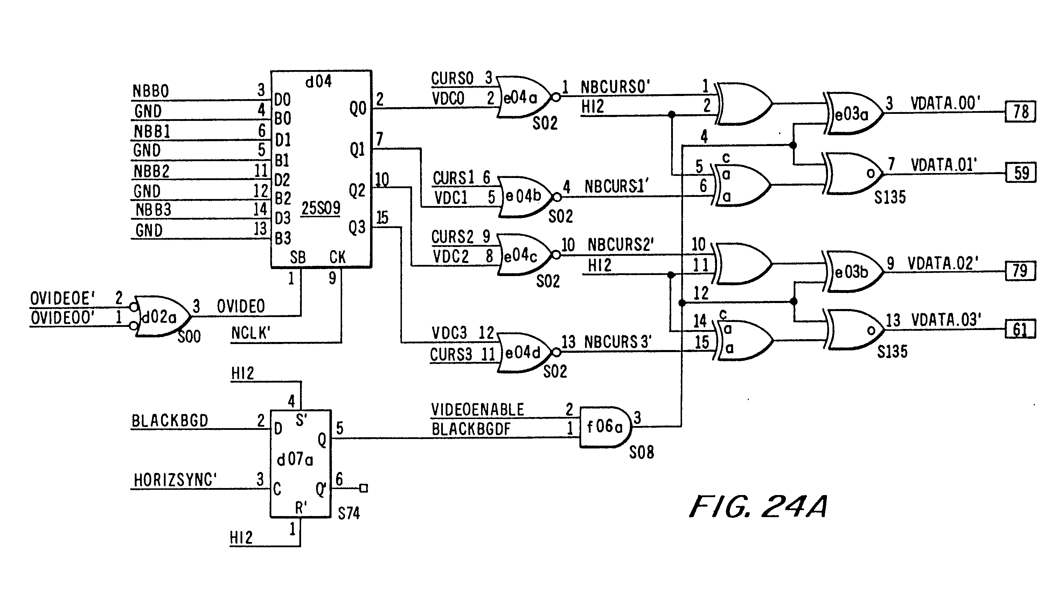

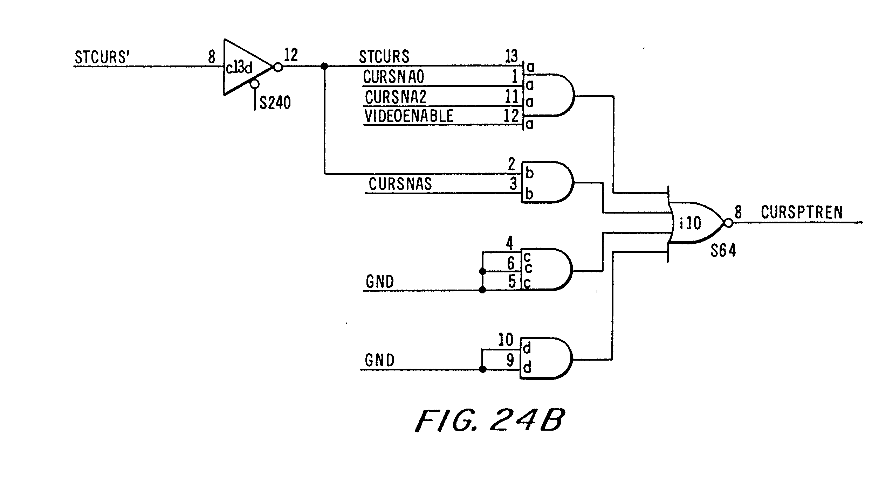

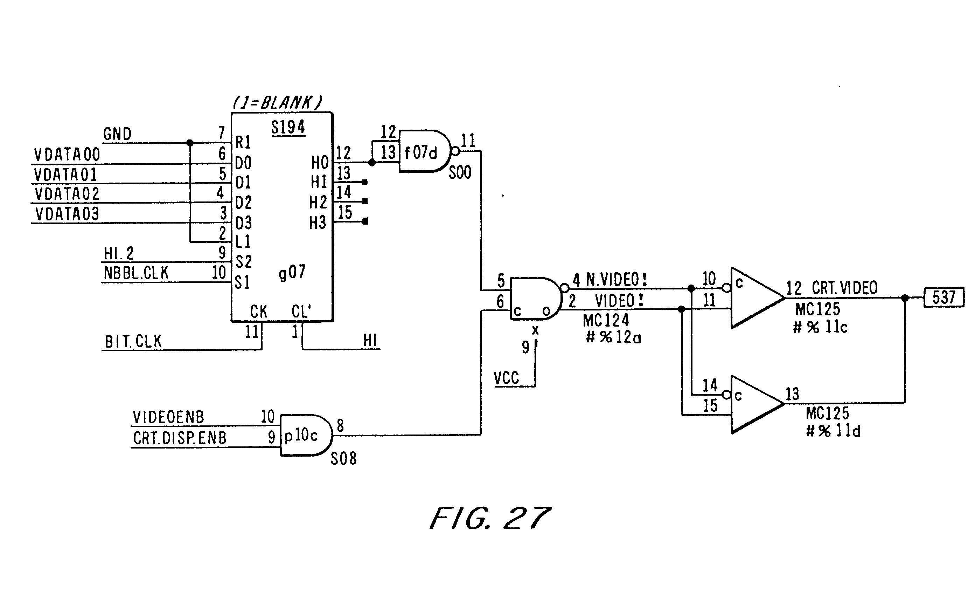

The ORing of the cursor and video data is done in the circuit shown in Figure 24, the cursor being supplied on lines Curs 0-3 from Figure 23 and the video being supplied on lines NBB 0-3 from Figure 22. The video is supplied through a multiplexer and latch d04 for timing purposes and is then ORed with the video in gates e04a-d to produce the final video which is sent out on lines VData 00-03 to the Figure 27 circuit.

Gates c13d and l 10 of Figure 24 provide a cursor pointer, CursPtEn, which controls the cursor bit counter l 11 of Figure 23, and therefore enables when to start and stop the cursor on each scan line. Thus, there will be a cursor pointer at the beginning and end of the cursor on each scan line that intersects the cursor.

The remainder of the circuits comprise a CRT Controller Device, a character generator and enough memory to display messages to the generator even when the remainder of the system, including the main processor, becomes inoperative. In normal operation the processor creates the fonts and loads the buffers with a bit map which is simply displayed by the CRT. However, when the processor is not operating, the CRT Controller and associated circuits can still generate messages, allowing the generator to run limited diagnostics, and be informed of the system status. To accomplish this function, the remainder of the circuits in the described embodiment have a separate power supply. The result is a stand-alone display system which can be exercised separately from the remainder of the system, an inherent advantage in using an interactive display to control a computer system.

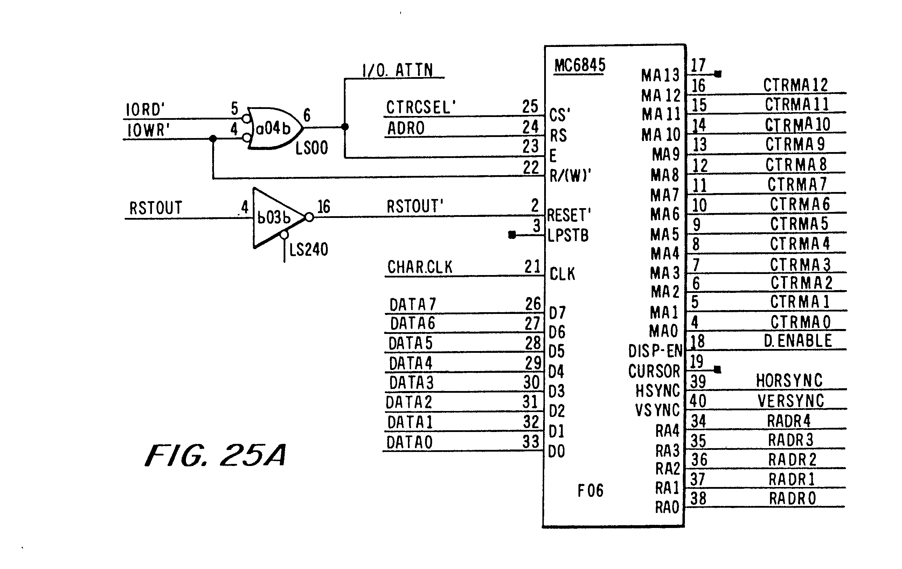

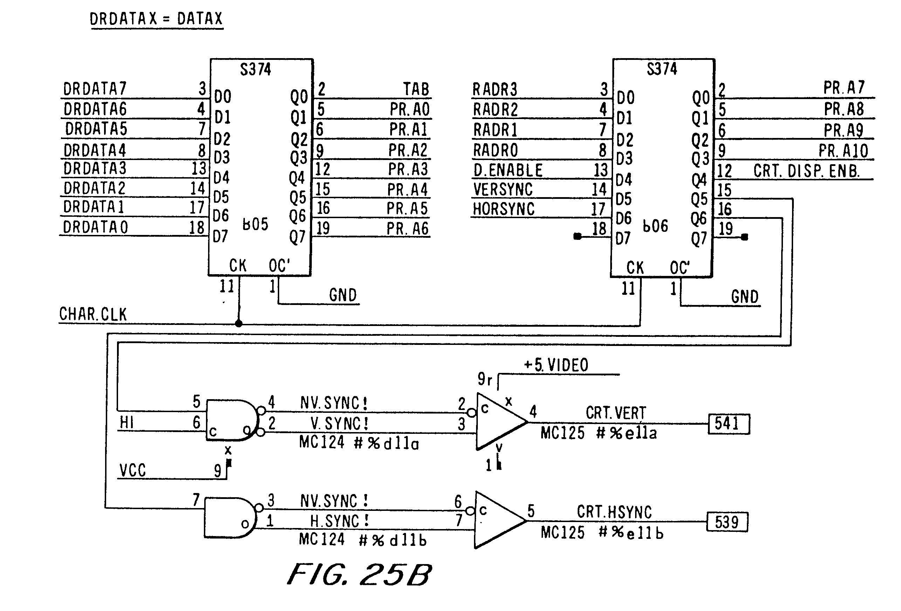

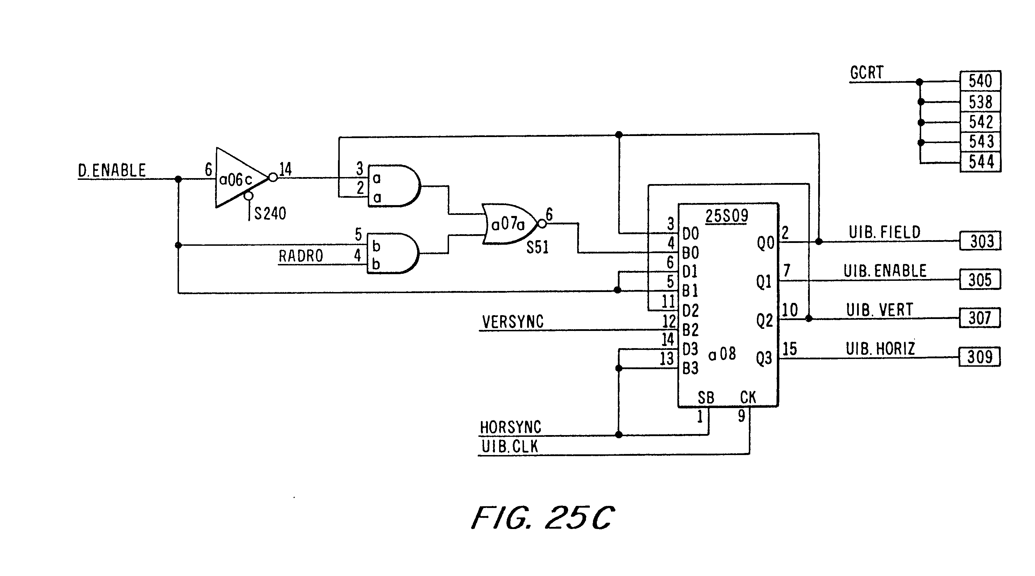

Figure 25 is a schematic diagram of the CRT controller section and includes the CRT controller, part number MC6845. This part receives control signals and chip parameters from the processor, such as the number of scan lines in the display, the number of bits per scan line, and the interlaced mode command.

Output lines CRTMA 0-12 are character generator memory address lines, and are used to address the local memory of Figure 11 which contains operator messages which are used in the local mode when the system processor is inoperative. This CRT controller also generates the vertical and horizontal sync pulses which are latched through device b06 and several gates to the CRT. The Disable signal is similarly latched out through multiplexer 208 to the processor and indicates whether the current fill is odd or even, and with the sync pulses, enables the output of the video from the processor when needed.

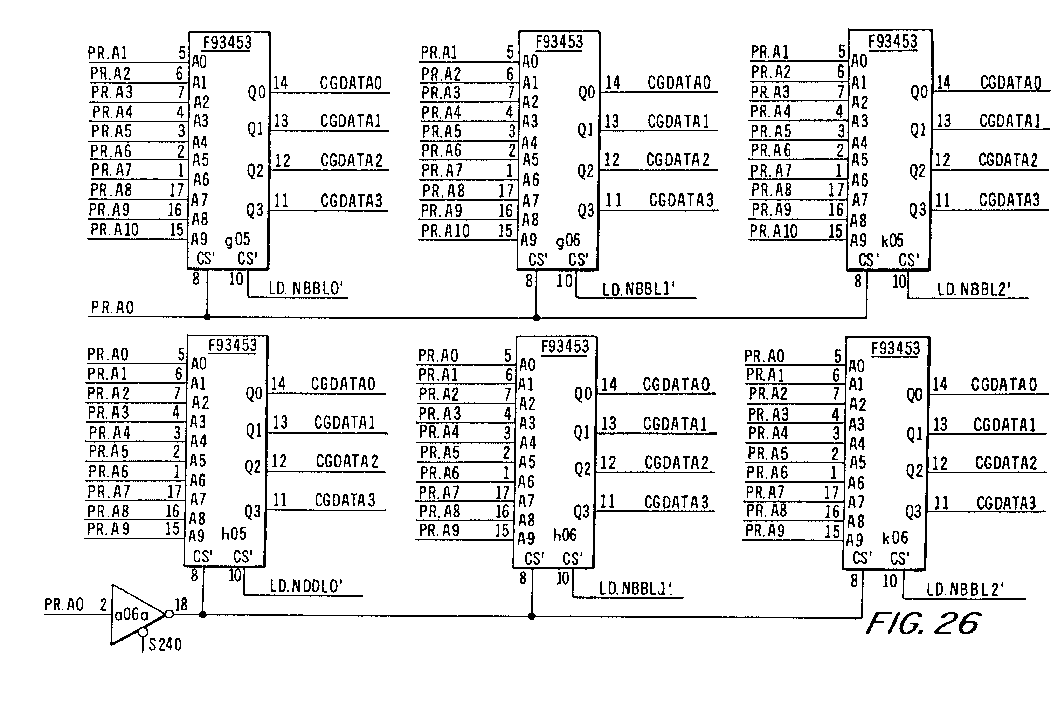

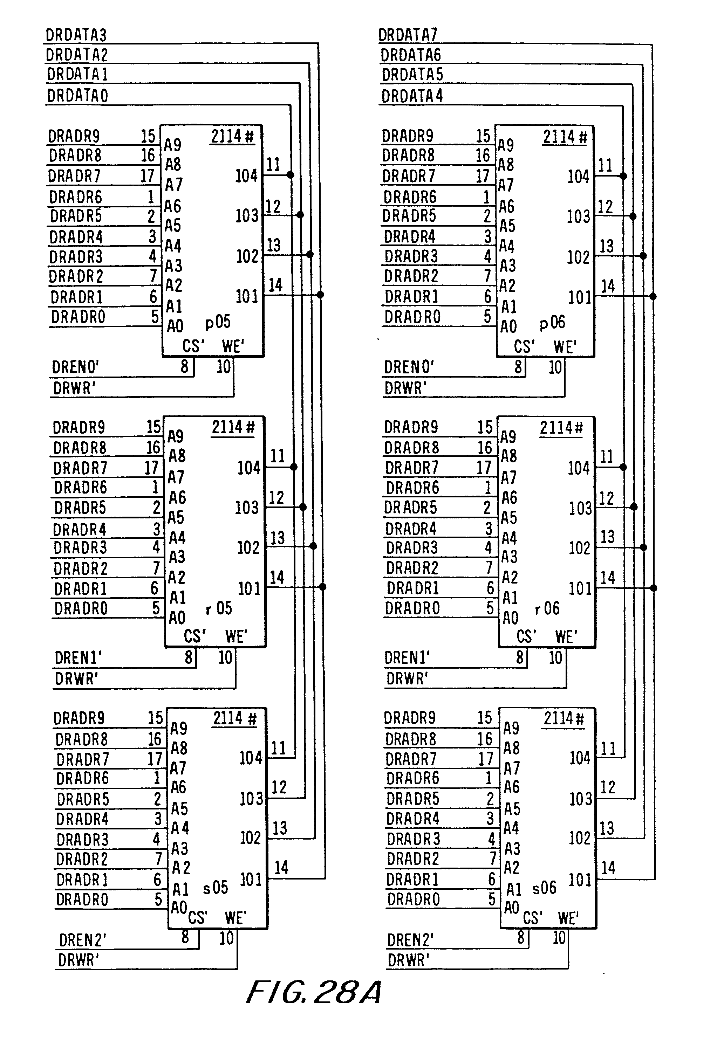

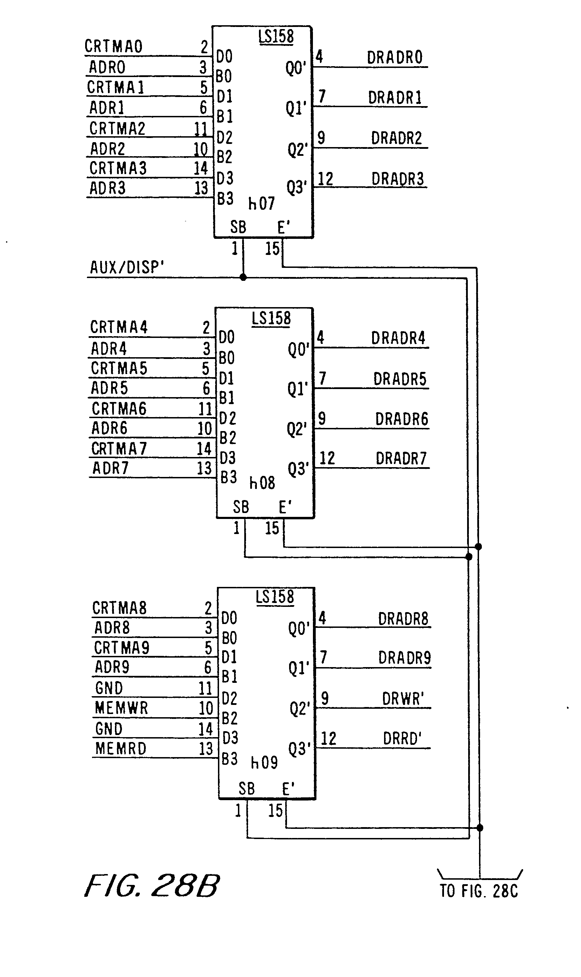

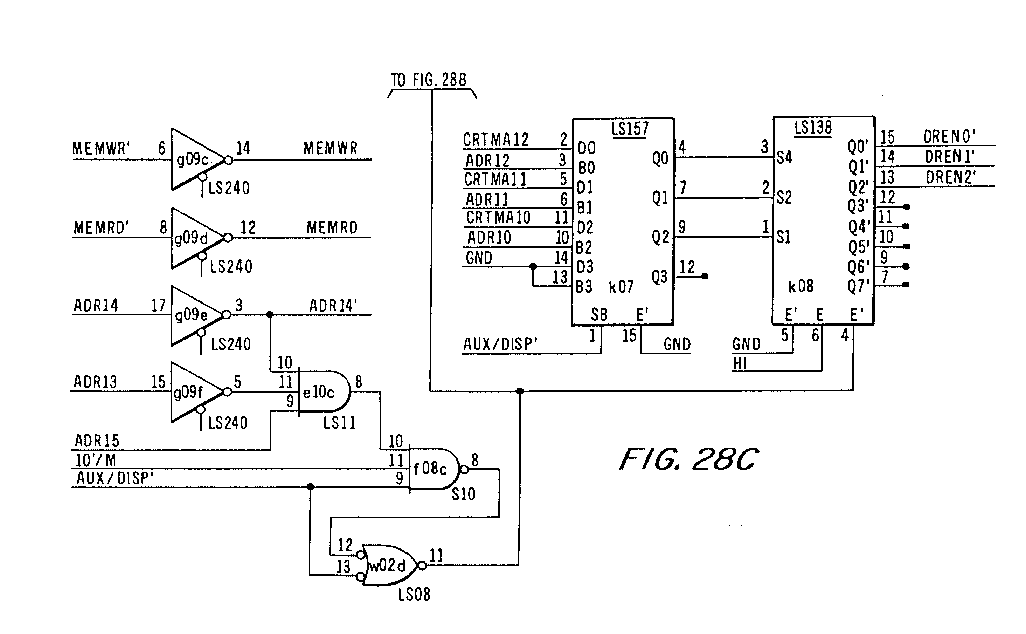

The scan line address output lines from the CRT controller RAdr 0-4 are connected to the registers b05, b06 along with lines DR Data 0-7 which may be driven by either the local message store of Figure 28 or the processor. In either case, the outputs PR.A0-10 are coupled to the front generator of Figure 26.

The Figure 26 circuit comprising PROMs g05, g06, K05, h05, h06, and k06, is the local font storage, and is used if the central processor is inoperative. The address lines PR.A1-10 are coupled from Figure 25 and the video output is coupled to the CRT on lines CGData 0-3.

Figure 27 shows the path of the four-bit video nibbles which are supplied on lines VData 00-03 from Figure 24 through register g07 where they are output in serial form to the CRT on the CRT.VIDEO line.

Figure 28 is a schematic of the page buffer comprising a 3K x 8 bit memory implemented from RAM devices p05, r05, s05, p06, r06, and s06. Address information is received on lines DRAdr 0-9 from multiplexers h07, R08 and R09 which select from address information from the processor on lines Adr 0-9 or from the CRT controller f06 of Figure 25 on lines CRTMA 0-9 in the local mode. In either case its memory contents, which is a maximum of three thousand ASCII characters, will be output on lines DRData 0-3 to the registers b05 and b06 of Figure 25. Line DRWR is the read/write enable line, allowing this memory to be loaded from the processor on the input/output lines DRData 0-7.

-20-

Figure 28 also contains the address control for the character generator memory. This comprises a multiplexer k07 and decoder k08 for enabling two of the six memory devices p05, p06, v05, v06, 505 and 506. The DRWR line controls the read/write enable function.

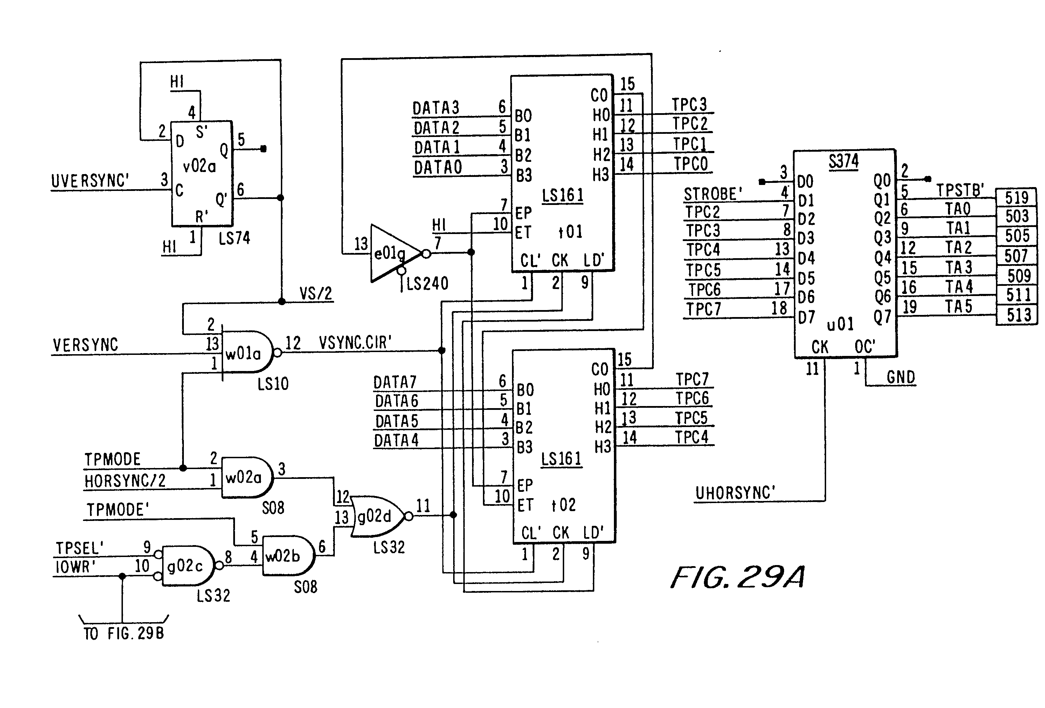

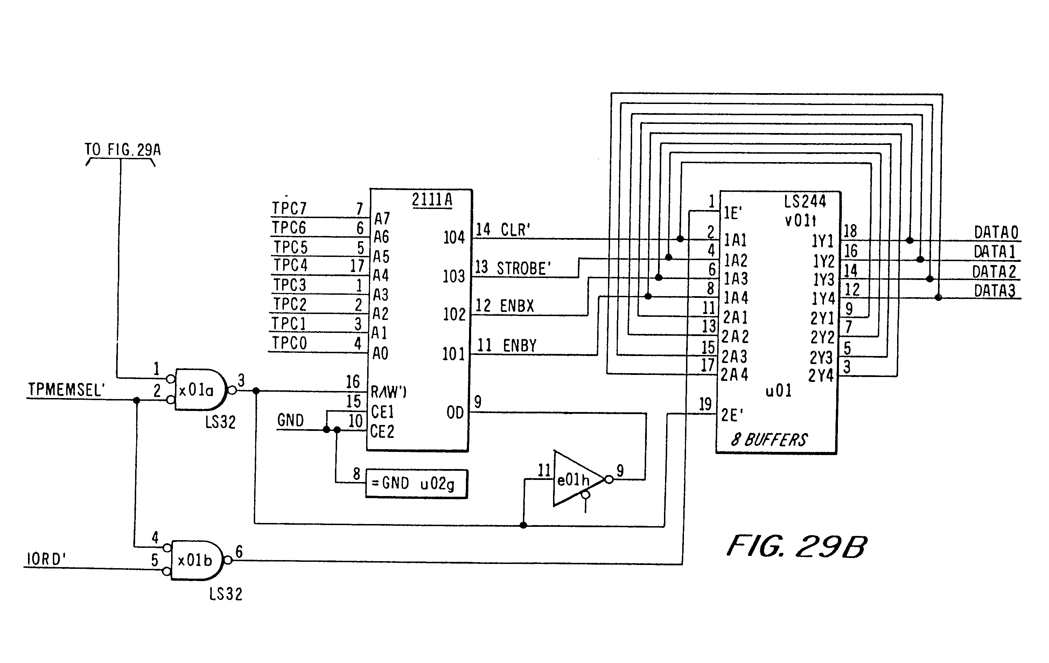

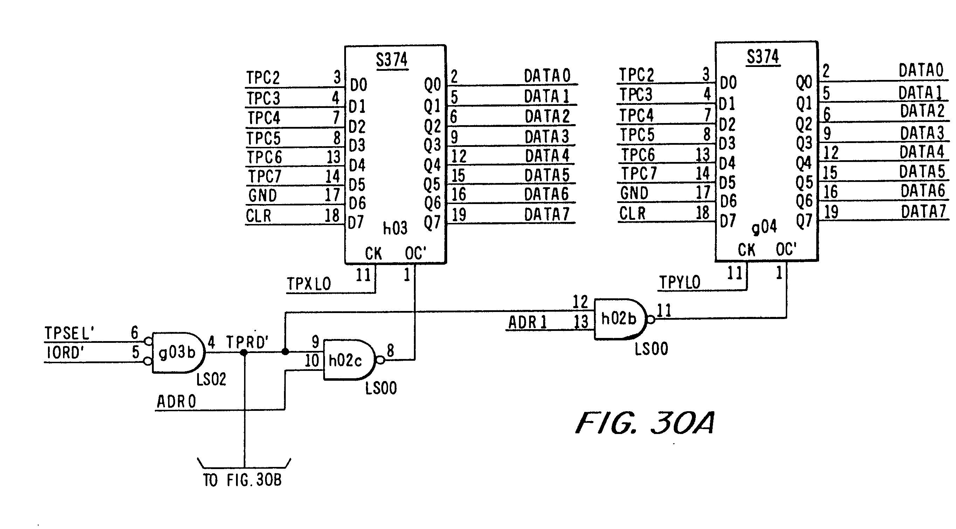

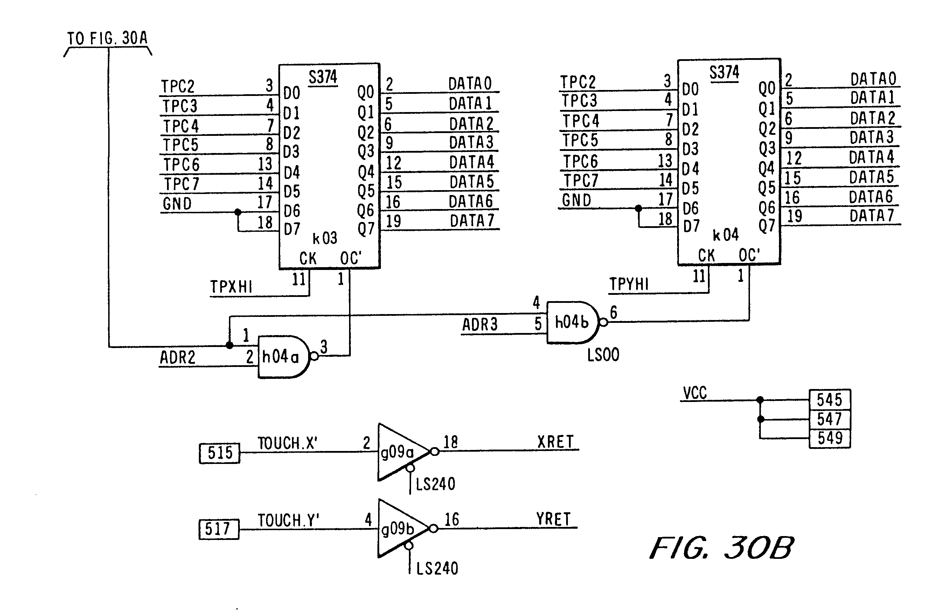

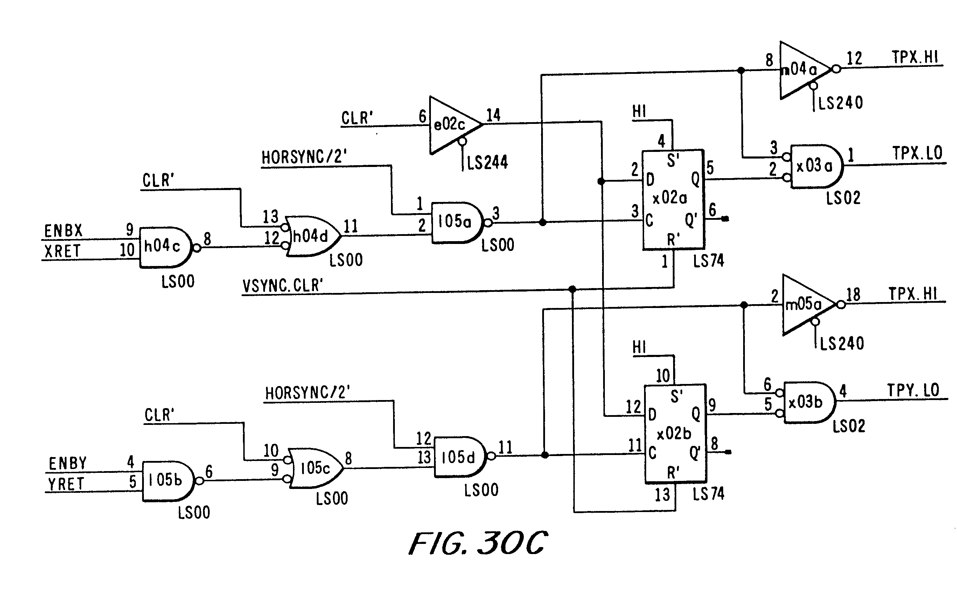

Figures 29 and 30 are the touch panel interface. The touch panel counter t01 t02 of Figure 29 counts through the rows and columns, driving the control RAM u02. This RAM is loaded with the appropriate data corresponding to the number of CRT rows and columns so that an enable X strobe, ENBX and an enable Y strobe ENBY, will be generated for each CRT row and column, as implemented by a photo diode and transistor pair. The data to load the RAM are originally received from the processor on lines Data 0-3, and the RAM output is also output on the same lines. The counter t01 t02 output also drives the touch panel strobe through register u01.

In Figure 30, the count of the touch panel counter t01, t02 is latched into register h03 when the first x hit occurs. Similarly the count at the time of the last x hit is loaded in register k03. These two values are then coupled out on the Data 0-7 lines to the processor where the center of the x hit is calculated. Registors g04 and h04 are the Y minimum and maximum registers.

Figure 30 gates g09a and g09b couple the X and Y coordinate returns to the UIL from the touch panel, as shown also in Figure 18.

The remainder of the logic in Figure 30 uses the timing of the X and Y return signals to produce signals TPX, HI, TPX.LO, TPY.HI and TPY.LO to latch the registers h03, g04, k03 and k04 as described above.

- 1 -

CLAIMS:

1.  A system for controlling a machine (102), characterised by:

a CRT (124) for displaying orthographic and imaginal displays to the operator,

a touch panel (125) for generating electrical signals which are a function of the location of a touched point on the display of said CRT (124), and

a computer (101) for receiving said signals and for generating, in response thereto, commands for controlling said machine (102) and for producing new displays for said CRT (124).

2.  The system of claim 1, characterised in that said touch panel (125) is a matrix of light sources and sensors.

3.  The system of claim 1 or 2, characterised in that said system includes keyboard (126) for entering alphanumeric data into said computer (101), said alphanumeric data to be used to control said machine (102) or to be added to said displays.

4.  The system of any preceding claim, characterised in that said computer includes means for transmitting to said CRT (124) at any time one of a plurality of displays stored in said computer (101), each display comprising imaginal data in the form of a set of controls and orthographic data in the form of explanation for said controls, said controls, when identified by said touch panel (125), enabling another of the plurality of stored displays or initiating a particular machine (102) function.

5.  The system of claim 4, characterised by a program for modifying said displays.

6.  The system of claim 5, characterised in that said display modifications may be either the modification of a portion of the imaginal data or a modification of the orthographic material associated with said imaginal data.

7.  The system of claim 4, characterised in that each of said displays is limited to command those machine functions that can be initiated at that time, or to command another display which also is so limited.

8. The system of any preceding claim, characterised in that said computer (101) can be controlled to create a bit map for display on said CRT 124.

9. The apparatus of any preceding claim, characterised by:

a memory (p05) for storing messages,

a font generator (g05) for converting said messages into video suitable for display on said CRT (124), and

a CRT controller (f06) for displaying the messages generated by said font generator (g05) in a video form to provide the CRT (124) with a source of messages for the operator in addition to said computer (101).

10. The system of claim 6 or any claim dependent therefrom characterised by means for duplicating a display element from one display onto another.

11. The system of claim 6 or any claim dependent therefrom characterised by means for cancelling an element on display.

12. A method of using a computer (101) to control an interactive CRT (124) and a machine (102) characterised by:

transmitting from the computer to the CRT a set of displays in imaginal and orthographic form from which the operator may select a command for the computer to transmit another display or a command for the computer to initiate a particular machine action,

pointing to the selected command to generate electrical signals which are a function of the position of the selected point on the CRT and

using the computer to respond to said electrical signals by initiating the selected machine function or by transmitting to said CRT the selected display.

13. The method of claim 12, characterised by entering alphanumeric information into the computer in response to said display as an alternative to said pointing step to select a command.

14 The method of claim 12 or 13, characterised by using said computer, in response to a particular combination of a display and an electrical signal, to modify a display.

15.    The method of claim 12, 13 or 14, characterised by displaying those commands which can be performed by said computer or said machine at the time.

16.    The method of any of claims 12-15, characterised by said computer 101 creating a bit map of said display prior to displaying it.

17.    The method of any of claims 12-16, characterised in that a local processor (f06) generates displays to provide the operator with information in the absence of a fully operational computer.

18.    The method of claim 14, characterised in that modification of a display comprises duplicating a display element from one display onto another.

19.    The method of claim 14, characterised in that modification comprises cancelling a display element on a display.

BASIC CONCEPTS

FIG. 1

SYSTEM FUNCTIONS

124 — CRT DISPLAY

123 — SCREEN REFRESH ELECTRONICS

122 — DISPLAY IMAGE IN MEMORY (2)

111 — DISPLAY IMAGE GENERATOR TASK (DT) (1)

116 — FRAME DEFINITIONS (2)

117 — FONT DEFINITIONS (2)

118 — IMAGE DEFINITIONS (2)

126 — KEYBOARD

125 — X-Y TOUCH DETECTOR

127 — MOUSE

121 — CURRENT BUTTON DEFINITIONS (2)

128 — X-Y TOUCH DECODE ELECTRONICS

112 — TOUCH FUNCTION DECODE TASK (TT) (1)

BUTTON SELECT

FRAME & BUTTON SELECT

NOTE: HEAVY LINES IDENTIFY FUNCTIONS UNIQUE TO THE USER INTERFACE DEVICE

(1) FUNCTIONS IMPLEMENTED THROUGH COMPUTER PROGRAMS.

(2) FUNCTIONS IMPLEMENTED THROUGH DATA TABLES IN COMPUTER MEMORY

TO FIG. 2B

FIG. 2A

0030160

TO FIG. 2A

BUTTON SELECT | FRAME & BUTTON SELECT

GLOBAL DATA BASE

*113*

CONTROL TABLES FOR THE USER INTERFACE CONTROL TASK *(2)*

*110*

USER INTERFACE CONTROL TASK (UT) (FINITE STATE AUTO-MATION) *(1)*

STATUS INDICATORS *(2)*

SWITCH SETTINGS

SYSTEM PARAMETERS

USER COMMANDS

*109*

STATE CHANGES

*114*

CONTROL TABLES FOR THE MACHINE CONTROL TASK *(2)*

MACHINE CONTROL TASK (MT) (FINITE STATE AUTOMATION *(1)*

*115*

INTERFACE CONTROL

INTERFACE STATUS

NOTE: HEAVY LINES IDENTIFY FUNCTIONS UNIQUE TO THE USER INTERFACE DEVICE

MACHINE INTERFACE CONTROL ELECTRONICS ~*119*

MACHINE CONTROL

MACHINE STATUS

MACHINE (9400 DUPLICATOR) *120*

(1) FUNCTIONS IMPLEMENTED THROUGH COMPUTER PROGRAMS
(2) FUNCTIONS IMPLEMENTED THROUGH DATA TABLES IN COMPUTER MEMORY

*FIG. 2B*

FIG. 3

MACHINE CONTROL TASK (MT)

USER INTERFACE CONTROL TASK (UT)

FIG. 4

DISPLAY IMAGE GENERATOR TASK (DT)

## FIG. 5

```
124              123              122              111
┌──────────┐   ┌──────────┐   ┌──────────┐   ┌──────────┐
│ CRT      │ ← │ SCREEN   │ ← │ DISPLAY  │ ← │ DISPLAY  │ (1)
│ DISPLAY  │   │ REFRESH  │   │ IMAGE IN │(2)│ IMAGE    │
│          │   │ELECTRONICS│   │ MEMORY   │   │ GENERATOR│
└──────────┘   └──────────┘   └──────────┘   │ TASK (DT)│
                                              └──────────┘
```

116
FRAME (2)
DEFINITIONS

117
FONT (2)
DEFINITIONS

118
IMAGE (2)
DEFINITIONS

121 — CURRENT (2)
BUTTON
DEFINITIONS

112
TOUCH (1)
FUNCTION
DECODE
TASK
(TT)

GLOBAL DATA BASE

STATUS (2)
INDICATIONS

SWITCH
SETTINGS

SYSTEM
PARAMETERS

BUTTON
SELECT

FRAME &
BUTTON
SELECT

110 — USER INTERFACE (1)
CONTROL TASK (UT)
(FINITE STATE
AUTOMATION)

115

TOUCH FUNCTION DECODE TASK (TT)

FIG. 6

TASK INITIALIZATION
OR
RESET COMMAND FROM THE USER TASK

SEND LOGIC-RESET STROBE TO
THE MACHINE INTERFACE

INITIALIZE MACHINE TASK (MT)
STATUS INDICATORS IN MEMORY,
INCLUDING THE MT CONTROL
STATE

ENABLE INTERRUPTS FROM
THE MACHINE INTERFACE

IDLE STATE
(TASK WAITING FOR STIMULIS)

USER COMMAND      EVENT      MACHINE INTERRUPT

DETERMINE PROCESS(ES) AND
CONTROL STATE CHANGES
FROM THE USER SECTION
OF THE MT CONTROL
TABLES

DETERMINE PROCESS(ES) AND
CONTROL STATE CHANGES
FROM THE MACHINE SECTION
OF THE MT CONTROL
TABLES

EXECUTE PROCESS(ES) AND
UPDATE THE MACHINE RELATED
STATUS INDICATORS IN
MEMORY, INCLUDING THE
MT CONTROL STATE

SIGNAL STATE CHANGES TO
THE USER INTERFACE
CONTROL TASK

OPERATION OF THE MACHINE CONTROL TASK (MT)

FIG. 7

0030160

TASK INITIATION

INITIALIZE USER TASK (UT)
STATUS INDICATORS IN
MEMORY, INCLUDING THE
CONTROL STATE

INITIATE THE MACHINE
CONTROL TASK

INITIALIZE THE DISPLAY IMAGE
GENERATOR AND SELECT THE
INITIAL DISPLAY FRAME

IDLE STATE
(TASK WAITING FOR STIMULUS)

BUTTON SELECTION    EVENT    MACHINE STATE CHANGE

DETERMINE PROCESS(ES) AND
CONTROL STATE CHANGES
FROM THE USER SECTION OF
THE UT CONTROL TABLES

DETERMINE PROCESS(ES) AND
CONTROL STATE CHANGES
FROM THE MACHINE SECTION
OF THE UT CONTROL TABLES

EXECUTE PROCESS(ES) AND
UPDATE THE UT RELATED STATUS
INDICATORS IN MEMORY, INCLUD-
ING THE UT CONTROL STATE

SIGNAL THE DISPLAY IMAGE
GENERATOR TO UPDATE
THE DISPLAYED IMAGE

OPERATION OF THE USER INTERFACE CONTROL TASK (UT)

*FIG. 8*

TASK INITIALIZATION

TURN OFF THE DISPLAY
(ALL PIXELS BLACK)

INITIALIZE DISPLAY TASK
(DT) STATUS INDICATORS

CLEAR (DELETE) ALL
CURRENT BUTTON
DEFINITIONS

WAIT FOR FRAME SELECT
FROM THE USER TASK

YES —— REVERSE VIDEO BUTTON ? —— NO

REVERSE VIDEO THE BUTTON

WAIT FOR BUTTON DE-SELECT

RESTORE NORMAL
BUTTON VIDEO

YES —— FRAME CHANGE ? —— NO

TURN OFF THE DISPLAY

CLEAR BUTTON
DEFINITIONS

PERFORM AN IMAGE UPDATE
TO CREATE A VALID IMAGE
AND CORRECT THE
BUTTON DEFINITIONS

BUTTON SELECT FROM
THE USER INTERFACE TASK

WAIT
FOR
STIMULUS

FRAME SELECT FROM THE
USER INTERFACE TASK

OPERATION OF THE DISPLAY IMAGE GENERATOR TASK (DT)

FIG. 9

BEGIN IMAGE UPDATE

FROM THE CURRENT FRAME INDEX
LOCATE THE FRAME DEFINITION
IN THE FRAME DEFINITION TABLES

INITIALIZE THE NEXT ELEMENT
INDEX

SELECT THE NEXT ELEMENT
FROM THE FRAME DEFINITION

END OF LIST

FINISHED

NO — CONDITIONAL DISPLAY ? — YES

TEST CONDITION REQUIREMENTS
AGAINST SYSTEM STATUS
FROM THE GLOBAL DATA BASE

YES — CONDITIONS MET ? — NO

ELEMENT CURRENTLY DISPLAYED ? — YES

NO

ADD THE
ELEMENT TO
THE DISPLAY

ELEMENT CURRENTLY DISPLAYED ? — NO

YES

REMOVE THE ELEMENT
FROM THE DISPLAY

DISPLAY IMAGE GENERATOR TASK (DT)
PROCESS OF UPDATING THE SCREEN IMAGE

*FIG. 10*

ADD OR REMOVE DISPLAY ELEMENT

FONT ← ELEMENT TYPE ? → IMAGE

DETERMINE THE BIT IMAGE FROM THE FONT DEFINITIONS TABLE

DETERMINE THE BIT IMAGE FROM THE IMAGE DEFINITIONS TABLES

EXCLUSIVE OR THE BIT IMAGE INTO THE DISPLAY IMAGE AREA OF THE SYSTEM'S MEMORY

WAS THIS A BUTTON ? — NO

YES

ADD ← PROCESS ? → DELETE

DEFINE THE BUTTON (LOCATION AND FUNCTION) TO THE CURRENT BUTTON DEFINITION TABLE

REMOVE THE BUTTON'S DEFINITION FROM THE CURRENT BUTTON DEFINITION TABLE

DISPLAY IMAGE GENERATOR TASK (DT)
PROCESS OF ADDING AND REMOVING SCREEN ELEMENTS

FINISHED

*FIG. 11*

TASK INITIALIZATION

INITIALIZE TOUCH TASK
(TT) STATUS INDICATORS
IN MEMORY

DE-SELECT ALL BUTTON
FUNCTIONS

WAIT FOR TOUCH
STIMULUS

CHECK X-Y COORDINATES
OF THE TOUCH AGAINST
THE CURRENT BUTTON
DEFINITIONS

VALID
TOUCH
POINT
?

YES     NO

SIGNAL BUTTON SELECT
TO THE USER INTERFACE
CONTROL TASK (FOR
FUNCTION PROCESSING

WAIT FOR TOUCH
REMOVAL

WAIT FOR BUTTON
DE-SELECT

SIGNAL BUTTON DE-
SELECT TO THE USER
INTERFACE CONTROL TASK

OPERATION OF THE TOUCH FUNCTION DECODE TASK (TT)

FIG. 12

FRAME DEFINITIONS

| FRAME 0 |
| FRAME 1 |
| ETC. |
| FRAME N |
| 0 = END OF LIST |

TABLE FORMATS FOR THE DISPLAY
IMAGE GENERATOR TASK

FRAME 1 DESCRIPTOR

| CONTROL |
| NULL |
| ELEMENT 1 |
| ELEMENT 2 |
| ELEMENT 3 |
| ELEMENT 4 |
| ELEMENT 5 |
| ELEMENT 6 |
| 0 |
| CONTROL |
| S | CONDITION |
| ELEMENT 7 |
| ELEMENT 8 |
| ELEMENT 9 |
| ELEMENT 10 |
| 0 |
| CONTROL |
| S | CONDITION |
| ELEMENT 11 |
| ELEMENT 12 |
| 0 |
| CONTROL |
| END OF LIST |

CONDITIONS TESTS
REFERENCE DATA IN
THE GLOBAL DATA BASE

ELEMENT DESCRIPTOR

| TYPE = ORTHO. LITERAL | |
| 1 | X POSITION |
| 1 | Y POSITION |
| | |
| TEXT STRING |
| | |
| 0 = END OF STRING |

ELEMENT DESCRIPTOR

| TYPE = IMAGINAL | |
| 1 | X POSITION |
| 1 | Y POSITION |
| IMAGE POINTER | |

(ACTUAL IMAGE BIT
PATTERN IS IN THE
INAGE DEFINITIONS
TABLE)

ELEMENT DESCRIPTOR

| TYPE = IMAG. DYNAMIC | |
| 1 | LAST X POSITION |
| 1 | LAST Y POSITION |
| 1 | NEW X POSITION |
| 1 | NEW Y POSITION |
| IMAGE POINTER | |

ELEMENT DESCRIPTOR

| TYPE = ORTHO. INDIRECT | |
| 1 | X POSITION |
| 1 | Y POSITION |
| TEXT POINTER | |

FIG. 13

14/49

0030160

TOUCH
TO
BEGIN

_150_

FIG. 14

READY

*152*

- SELECT NUMBER OF COPIES
- SELECT FEATURES REQUIRED
- PLACE ORIGINALS IN ADH OR ON DOCUMENT GLASS
- TOUCH START PRINT FOR COPIES

NUMBER OF COPIES

*151*

*156*

AUTOMATIC
DOCUMENT HANDLER

SORTER *157*

| 1 | *154* |

JOB RECOVERY    JOB SUPPLEMENT

| 1 | 2 | 3 |
| 4 | 5 | 6 | *153* |
| 7 | 8 | 9 |
|  | 0 | * | CLEAR |

*155*

AUTO FEED    SETS

SINGLE FEED    STACKS

── FEATURES ──

AUXILIARY
PAPER TRAY

VARIABLE
DENSITY

*160*

STOP PRINT

TWO SIDED
COPY

IMAGE
REDUCTION

*159*

START PRINT

SIDE 2
IMAGE SHIFT

ASSIST

*158* ?

FIG. 15

READY

−ADJUST REDUCTION TO PERCENT OF ORIGINAL

−100  ↑ 162
− 95  HIGHER
− 90
161 − 85  PERCENT OF ORIGINAL
− 80
− 75
− 70  LOWER
− 65  ↓ 163

VARIABLE DENSITY
165

RETURN
164

ASSIST
?

FIG. 16

READY

— SELECT DENSITY TO CORRESPOND TO YOUR ORIGINALS

———— CONDITION OF ORIGINALS ————

LIGHT
IMAGE
☐ ~169

PASTEL
PAPER
☐ ~170

DARK
BACKGROUND
☐ ~171

▪ ~166

← 167    MOVE    → 168

IMAGE
REDUCTION
173 ~ ☐

RETURN
☐
172

ASSIST
?

FIG. 17

UI CONTROL LOGIC

COMPUTER — 10

COMPUTER INFO VIA I/O BUS

CRT VIDEO & CURSOR

SCANLINE BUFFER (2EA.), 256×16
CURSOR DATA BUFFERS, 256×4
PROCESSOR INTERFACE

VIDEO CONTROL

MOTOROLA 6845
H SYNC
V SYNC
DISPLAY ENABLE
INTERLACE FIELD CONTROL
CHARACTER GEN. MEM. ADDR.

— 12

TOUCH PANEL
DATA HANDLING

X   MAX, MIN. REG.
Y   MAX  MIN. REG.
CONTROL RAM
TP SCAN COUNTER

VERT. SYNC, HORIZ. SYNC., VIDEO

ON/OFF SWITCHES

6 LINES, TOUCH PANEL
          COORDINATES
1 LINE, TOUCH PANEL
          STROBE
2 LINES, X & Y COORDINATES
          RETURNS

UI — 11

CRT

TOUCH
PANEL

POWER
ON/OFF

FIG. 18

19/49

0030160

*I DATA BUFFER*

| | | F 19 | | | | |
|---|---|---|---|---|---|---|
| IMUX.08 | 3 | D0 | Q0 | 2 | IDATA.08 | 165 |
| IMUX.09 | 4 | D1 | Q1 | 5 | IDATA.09 | 164 |
| IMUX.10 | 7 | D2 | Q2 | 6 | IDATA.10 | 162 |
| IMUX.11 | 8 | D3 | Q3 | 9 | IDATA.11 | 161 |
| IMUX.12 | 13 | D4 S374 | Q4 | 12 | IDATA.12 | 159 |
| IMUX.13 | 14 | D5 | Q5 | 15 | IDATA.13 | 158 |
| IMUX.14 | 17 | D6 | Q6 | 16 | IDATA.14 | 157 |
| IMUX.15 | 18 | D7 | Q7 | 19 | IDATA.15 | 153 |

CK    OC'

EDGECLK1'    11    1
IMEF'

| | | | | | |
|---|---|---|---|---|---|
| VDCO | 6 | X0 | | | |
| FIELDF | 5 | X1 | OX | 7 | IMUX.12 |
| UIBDATA 12 | 4 | X2 | | | |
| HI 1 | 3 | X3  I 18 | | | |
| | | S253 | | | |
| VDC1 | 10 | Y0 | | | |
| VERTSYNCF | 11 | Y1 | OY | 9 | IMUX.13 |
| UIBDATA13 | 12 | Y2 | | | |
| GND | 13 | Y3 | | | |
| LADDR.6' | 2 | S2 | | | |
| LADDR.7' | 14 | S1 | | | |

EX'    EY'

GND    1    15

*FIG. 19*

FIG. 20A

*FIG. 20B*

FIG. 21A

FIG. 21B

24/49

0030160

FIG. 22A

FIG. 22B

FIG. 22C

FIG. 23A

FIG. 23B

FIG. 23C

30/49

0030160

**FIG. 23D**

TO FIG. 23C

| | | g12 | | | |
|---|---|---|---|---|---|
| OUTD.08 | 3 | D0 | Q0 | 2 | XC2 |
| OUTD.09 | 4 | D1 | Q1 | 5 | XC3 |
| OUTD.10 | 7 | D2 | Q2 | 6 | XC4 |
| OUTD.11 | 8 | D3 | Q3 | 9 | XC5 |
| OUTD.12 | 13 | D4 | Q4 | 12 | XC6 |
| OUTD.13 | 14 | D5 S374 | Q5 | 15 | XC7 |
| OUTD.14 | 17 | D6 | Q6 | 16 | XC8 |
| OUTD.15 | 18 | D7 | Q7 | 19 | XC9 |

CK    OC'

CPLDCLK'    11    1
GND

| | | i11 | | |
|---|---|---|---|---|
| 6 | B0 | CO | 15 | |
| 5 | B1 | H0 | 11 | CURSNA0 |
| 4 | B2 | H1 | 12 | CURSNA1 |
| 3 | B3 | H2 | 13 | CURSNA2 |
| | | H3 | 14 | CURSNA3 |

CURSPTREN    7  EP
                      10  ET
                              S163

CL'  CK  LD'
1    2    9

CDIAG'
CMCLK'
HORIZSYNC'

31/49

0030160

FIG. 24A

FIG. 24B

**FIG. 25A**

I/O. ATTN

IORD' — 5
IOWR' — 4 — o04b — 6 — LS00

CTRCSEL' — 25 — CS'
ADR0 — 24 — RS
— 23 — E
— 22 — R/(W)'

RSTOUT — 4 — b03b — 16 — LS240

RSTOUT' — 2 — RESET'
— 3 — LPSTB

CHAR.CLK — 21 — CLK

DATA7 — 26 — D7
DATA6 — 27 — D6
DATA5 — 28 — D5
DATA4 — 29 — D4
DATA3 — 30 — D3
DATA2 — 31 — D2
DATA1 — 32 — D1
DATA0 — 33 — D0

MC6845

MA13 — 17
MA12 — 16 — CTRMA12
MA11 — 15 — CTRMA11
MA10 — 14 — CTRMA10
MA9 — 13 — CTRMA9
MA8 — 12 — CTRMA8
MA7 — 11 — CTRMA7
MA6 — 10 — CTRMA6
MA5 — 9 — CTRMA5
MA4 — 8 — CTRMA4
MA3 — 7 — CTRMA3
MA2 — 6 — CTRMA2
MA1 — 5 — CTRMA1
MA0 — 4 — CTRMA0
DISP-EN — 18 — D.ENABLE
CURSOR — 19
HSYNC — 39 — HORSYNC
VSYNC — 40 — VERSYNC
RA4 — 34 — RADR4
RA3 — 35 — RADR3
RA2 — 36 — RADR2
RA1 — 37 — RADR1
RA0 — 38 — RADR0

F06

DRDATAX = DATAX

FIG. 25B

*FIG. 25C*

F93453

PR.A1 5 A0
PR.A2 6 A1
PR.A3 7 A2 Q0 14 CGDATA0
PR.A4 4 A3 Q1 13 CGDATA1
PR.A5 3 A4
PR.A6 2 A5 Q2 12 CGDATA2
PR.A7 1 A6
PR.A8 17 A7 Q3 11 CGDATA3
PR.A9 16 A8
PR.A10 15 A9 g05
CS' CS'
8 10 LD.NBBL0'

PR.A0

F93453

PR.A1 5 A0
PR.A2 6 A1
PR.A3 7 A2 Q0 14 CGDATA0
PR.A4 4 A3 Q1 13 CGDATA1
PR.A5 3 A4
PR.A6 2 A5 Q2 12 CGDATA2
PR.A7 1 A6
PR.A8 17 A7 Q3 11 CGDATA3
PR.A9 16 A8
PR.A10 15 A9 g06
CS' CS'
8 10 LD.NBBL1'

F93453

PR.A1 5 A0
PR.A2 6 A1
PR.A3 7 A2 Q0 14 CGDATA0
PR.A4 4 A3 Q1 13 CGDATA1
PR.A5 3 A4
PR.A6 2 A5 Q2 12 CGDATA2
PR.A7 1 A6
PR.A8 17 A7 Q3 11 CGDATA3
PR.A9 16 A8
PR.A10 15 A9 k05
CS' CS'
8 10 LD.NBBL2'

F93453

PR.A0 5 A0
PR.A1 6 A1
PR.A2 7 A2 Q0 14 CGDATA0
PR.A3 4 A3 Q1 13 CGDATA1
PR.A4 3 A4
PR.A5 2 A5 Q2 12 CGDATA2
PR.A6 1 A6
PR.A7 17 A7 Q3 11 CGDATA3
PR.A8 16 A8
PR.A9 15 A9 h05
CS' CS'
8 10 LD.NDDL0'

F93453

PR.A0 5 A0
PR.A1 6 A1
PR.A2 7 A2 Q0 14 CGDATA0
PR.A3 4 A3 Q1 13 CGDATA1
PR.A4 3 A4
PR.A5 2 A5 Q2 12 CGDATA2
PR.A6 1 A6
PR.A7 17 A7 Q3 11 CGDATA3
PR.A8 16 A8
PR.A9 15 A9 h06
CS' CS'
8 10 LD.NBBL1'

F93453

PR.A0 5 A0
PR.A1 6 A1
PR.A2 7 A2 Q0 14 CGDATA0
PR.A3 4 A3 Q1 13 CGDATA1
PR.A4 3 A4
PR.A5 2 A5 Q2 12 CGDATA2
PR.A6 1 A6
PR.A7 17 A7 Q3 11 CGDATA3
PR.A8 16 A8
PR.A9 15 A9 k06
CS' CS'
8 10 LD.NBBL2'

PR.A0 2 a06a 18
S240

0030160

FIG. 26

(1=BLANK)

S194

GND 7 R1
VDATA00 6 D0
VDATA01 5 D1
VDATA02 4 D2
VDATA03 3 D3
2 L1
HI.2 9 S2
NBBL.CLK 10 S1

g07

H0 12
H1 13
H2 14
H3 15

CK 11   CL' 1

BIT.CLK   HI

12
13 f07d 11
S00

5
6 c o
MC124
#%12a
4 N.VIDEO!
2 VIDEO!

x
9
VCC

VIDEOENB 10
CRT.DISP.ENB 9 p10c 8
S08

10
11 c 12 CRT.VIDEO
MC125
#%11c

14
15 c 13
MC125
#%11d

537

FIG. 27

0030160

FIG. 28A

CRTMA0    2  D0
ADR0      3  B0        Q0'  4   DRADR0
CRTMA1    5  D1
ADR1      6  B1        Q1'  7   DRADR1
CRTMA2   11  D2
ADR2     10  B2        Q2'  9   DRADR2
CRTMA3   14  D3
ADR3     13  B3  h07   Q3' 12   DRADR3

LS158

SB    E'
1     15

AUX/DISP'

CRTMA4    2  D0
ADR4      3  B0        Q0'  4   DRADR4
CRTMA5    5  D1
ADR5      6  B1        Q1'  7   DRADR5
CRTMA6   11  D2
ADR6     10  B2        Q2'  9   DRADR6
CRTMA7   14  D3
ADR7     13  B3  h08   Q3' 12   DRADR7

LS158

SB    E'
1     15

CRTMA8    2  D0
ADR8      3  B0        Q0'  4   DRADR8
CRTMA9    5  D1
ADR9      6  B1        Q1'  7   DRADR9
GND      11  D2
MEMWR    10  B2        Q2'  9   DRWR'
GND      14  D3
MEMRD    13  B3  h09   Q3' 12   DRRD'

LS158

SB    E'
1     15

*FIG. 28B*

TO FIG. 28C

TO FIG. 28B

FIG. 28C

41/49

0030160

FIG. 29A

42/49

0030160

FIG. 29B

FIG. 30A

FIG. 30B

FIG. 30C

0030160

READY

FRAME CHANGE 1- PICKUP

- SELECT FUNCTION: MOVE OR DUPLICATE
- SELECT FRAME TO MOVE/DUPLICATE FROM BY NUMBER AND TOUCH START
- WHEN THE FRAME APPEARS, SELECT THE BUTTON TO MOVE/DUPLICATE BY
  TOUCHING IT, AND TERMINATE WITH RETURN

MOVE $X1-1$
180

DUPLICATE $X1-2$
181

FRAME NUMBER

| 1 | 2 | 3 | $X1-3$ |
| 4 | 5 | 6 | 182 |
| 7 | 8 | 9 |  |
|   | 0 | C |  |

START $X1-4$
183

CANCEL $X1-5$
184

FIG. 31

READY

FRAME CHANGE 2-DEPOSIT

- SELECT THE FRAME TO RECEIVE THE BUTTON BY NUMBER AND TOUCH START
- WHEN THE FRAME APPEARS, POSITION THE BUTTON BY TOUCH
- USE RETURN TO SIGNAL COMPLETION

FRAME NUMBER

| 1 | 2 | 3 | X2-3 |
| 4 | 5 | 6 | ~185 |
| 7 | 8 | 9 | |
| | 0 | C | |

START      X-2-4

                        ~186

CANCEL     X2-5

                        ~187

FIG. 32

0030160

49/49

READY

- SELECT NUMBER OF COPIES
- SELECT FEATURES REQUIRED
- PLACE ORIGINALS IN ADH OR ON DOCUMENT GLASS
- TOUCH START PRINT FOR COPIES

NUMBER OF COPIES          AUTOMATIC          SORTER
                     DOCUMENT HANDLER

| 1 |

| 1 | 2 | 3 |     JOB RECOVERY        JOB SUPPLEMENT

| 4 | 5 | 6 |      AUTO FEED              SETS

| 7 | 8 | 9 |

|   | 0 | C |     SINGLE FEED           STACKS

──────────────── FEATURES ────────────────

          AUXILIARY          VARIABLE
        PAPER TRAY           DENSITY

STOP PRINT

          TWO SIDED            IMAGE
            COPY             REDUCTION

START PRINT

           SIDE 2             LIGHT
        IMAGE SHIFT           IMAGE          ASSIST

                                            158

FIG. 33